(19) Europäisches Patentamt
European Patent Office
Office européen des brevets

(11) **EP 3 848 792 B1**

(12) **EUROPEAN PATENT SPECIFICATION**

(45) Date of publication and mention
of the grant of the patent:
**18.01.2023  Bulletin 2023/03**

(21) Application number: **20748901.4**

(22) Date of filing: **03.02.2020**

(51) International Patent Classification (IPC):
**G06F 7/58** $^{(2006.01)}$

(52) Cooperative Patent Classification (CPC):
**G06F 7/588; H04L 9/0852**

(86) International application number:
**PCT/CN2020/074189**

(87) International publication number:
**WO 2020/156561 (06.08.2020 Gazette 2020/32)**

(54) **QUANTUM RANDOM NUMBER GENERATOR AND KEY GENERATION SYSTEM**

QUANTEN-ZUFALLSZAHLENGENERATOR UND SCHLÜSSELGENERIERUNGSSYSTEM

GÉNÉRATEUR DE NOMBRES ALÉATOIRES QUANTIQUES ET SYSTÈME DE GÉNÉRATION DE CLÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.02.2019  CN 201910108760**

(43) Date of publication of application:
**14.07.2021  Bulletin 2021/28**

(73) Proprietor: **HUAWEI TECHNOLOGIES CO., LTD.
Shenzhen, Guangdong 518129 (CN)**

(72) Inventors:
• **LI, Zhengyu
Shenzhen, Guangdong 518129 (CN)**

• **YANG, Jiangling
Shenzhen, Guangdong 518129 (CN)**
• **WU, Yuping
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 3 040 853       CN-A- 103 942 030
CN-A- 108 563 422    CN-A- 109 117 117
CN-A- 109 240 645    US-A1- 2007 127 718
US-A1- 2013 036 145    US-B1- 7 284 024**

## Description

### TECHNICAL FIELD

This application relates to the field of quantum communication and information security, and in particular, to a quantum random number generator and a key generation system.

### BACKGROUND

A quantum random number generator is a physical component used to generate a true random number, and is mainly used in the field of information security. For example, the quantum random number generator may be configured to generate a random verification code of a website or a random key of a secure network.

In a related technology, a quantum random number generator usually includes a laser, a beam splitter, a homodyne detector, and a processing module. The beam splitter has two input ends and two output ends. One input end is connected to the laser, and is used to receive a laser beam emitted by the laser. The other input end is floating, and is used to detect shot noise in a vacuum state. The two output ends of the beam splitter are both connected to the homodyne detector. A split ratio of the beam splitter is usually 1:1. The beam splitter can split the received laser beam and the shot noise into two laser beams with equal power and output the two laser beams to the homodyne detector. The homodyne detector is configured to convert each received laser beam into an electronic signal, detect a difference between two electronic signals, and output a detection result to the processing module. The processing module is configured to generate a random number based on the detection result. When it can be ensured that the split ratio of the beam splitter is strictly 1:1, an average value of the detection result detected by the homodyne detector may be 0, and a variance of the detection result detected by the homodyne detector may be directly proportional to a variance reflecting the shot noise. Because the shot noise has true randomness, the random number generated based on the detection result is a true random number.

However, the quantum random number generator in the related technology has a relatively high requirement on the split ratio of the beam splitter. When the split ratio of the beam splitter is deviated, the average value of the detection result detected by the homodyne detector is not 0. In other words, a direct current bias exists in the detection result. As a result, it is more difficult to detect the shot noise in the vacuum state, and complexity of generating the random number is relatively high.

### SUMMARY

This application provides a quantum random number generator and a key generation system, to resolve a problem in a related technology that a quantum random number generator has a relatively high requirement on a split ratio of a beam splitter. Technical solutions are as follows.

According to one aspect, this application provides a quantum random number generator, including a laser generation module, a first beam splitter, a detector, and a processing module, where the laser generation module is connected to both a first input end and a second input end of the first beam splitter, and the laser generation module is configured to emit a first laser beam to the first input end, emit a second laser beam to the second input end, and adjust power of at least one of the first laser beam and the second laser beam, where the first laser beam and the second laser beam satisfy at least one of the following conditions: an absolute value of a frequency difference is beyond a response frequency range of the detector and polarization directions are orthogonal; an output end of the first beam splitter is connected to an input end of the detector, and the first beam splitter is configured to couple the received first laser beam and the received second laser beam to obtain two laser beams, and output the two laser beams to the detector; an output end of the detector is connected to the processing module, and the detector is configured to generate one electronic signal based on each received laser beam, detect a difference between two electronic signals, and send a detection result to the processing module, where a value of the detection result is directly proportional to a value of the difference; and the processing module is configured to generate a random number based on the detection result.

According to the quantum random number generator provided in this application, the laser generation module of the quantum random number generator may adjust the power of the at least one of the first laser beam and the second laser beam, so that an average value of the detection result output by the detector is close to 0. In this way, impact of a deviation of a split ratio of the beam splitter on the detection result of the detector can be avoided. This ensures reliability of the detection result, so that the processing module can directly generate the random number based on the detection result without processing a direct current bias in the detection result. This effectively improves efficiency of the quantum random number generator in generating the random number.

Optionally, the processing module may be further configured to periodically sample the detection result, average sampling points in a period, and send an average value of the detection result to the laser generation module. The laser generation module may further adjust the power of the at least one of the first laser beam and the second laser beam based on the average value of the detection result, until an absolute value of the average value of the detection result is less than a difference threshold.

Optionally, the quantum random number generator may further include a low-pass filter. The detector is further configured to send the detection result to the low-pass filter. The low-pass filter is configured to perform low-pass filtering on the detection result to obtain an average value of the detection result, and send the average value of the detection result to the laser generation module. The laser generation module is further configured to adjust the power of the at least one of the first laser beam and the second laser beam based on the average value of the detection result, until an absolute value of the average value of the detection result is less than a difference threshold.

The laser generation module adaptively adjusts the power of the laser beam based on the average value that is of the detection result and that is fed back by the processing module or the low-pass filter, to ensure efficiency and reliability of the laser generation module in adjusting the power.

Optionally, the laser generation module may be configured to: when the absolute value of the average value of the detection result is greater than the difference threshold, adjust power of one laser beam of the first laser beam and the second laser beam in an adjustment direction of power increase or decrease; and when it is detected that an absolute value of an average value that is of the detection result and that is received after the power adjustment is less than the absolute value of the average value that is of the detection result and that is received before the power adjustment, continue to adjust the power of the one laser beam in a same adjustment direction, until the absolute value of the average value of the detection result is less than the difference threshold; or when it is detected that an absolute value of an average value that is of the detection result and that is received after the power adjustment is greater than the absolute value of the average value that is of the detection result and that is received before the power adjustment, continue to adjust the power of the one laser beam in an opposite adjustment direction, until the absolute value of the average value of the detection result is less than the difference threshold.

In a process of adjusting the power, the laser generation module may flexibly change the adjustment direction of the power based on a change of the absolute value of the average value of the detection result, to improve power adjustment efficiency.

Optionally, the laser generation module may include a first laser, a second laser, and a power adjustment submodule.

The first laser is connected to the first input end of the first beam splitter, and the first laser is configured to emit the first laser beam. The second laser is connected to the second input end of the first beam splitter, and the second laser is configured to emit the second laser beam. The power adjustment submodule is connected to at least one of the first laser and the second laser, and may be configured to adjust power of a laser beam emitted by the laser connected to the power adjustment submodule.

The two laser beams emitted by the first laser and the second laser may satisfy at least one of the following conditions: the absolute value of the frequency difference is beyond the response frequency range of the detector and the polarization directions are orthogonal. The two lasers are disposed, and each laser emits one laser beam, so that flexibility in adjusting frequencies and the polarization directions of the two laser beams can be effectively improved.

Optionally, the power adjustment submodule may include at least one of a first current control submodule and a second current control submodule. The first current control submodule is connected to the first laser, and the first current control submodule is configured to adjust a drive current of the first laser. The second current control submodule is connected to the second laser, and the second current control submodule is configured to adjust a drive current of the second laser.

The current control submodule adjusts the drive current of the laser, so that the power of the laser beam emitted by the laser can be adjusted. In this way, power adjustment efficiency is relatively high.

Optionally, the power adjustment submodule may include at least one of a first optical attenuator and a second optical attenuator. The first optical attenuator is connected to both the first laser and the first input end of the first beam splitter, and the first optical attenuator is configured to adjust power of the first laser beam emitted by the first laser. The second optical attenuator is connected to both the second laser and the second input end of the first beam splitter, and the second optical attenuator is configured to adjust power of the second laser beam emitted by the second laser.

When the optical attenuator adjusts the power of the laser beam emitted by the laser, adjustment stability is relatively high because power of the laser is not affected.

Optionally, the power adjustment submodule may include a current control submodule and an optical attenuator.

Optionally, the first laser beam and the second laser beam satisfy that the absolute value of the frequency difference is beyond the response frequency range of the detector. The laser generation module includes a laser and a frequency modulator. The laser is connected to an input end of the frequency modulator, and the laser is configured to emit an initial laser beam to the frequency modulator. An output end of the frequency modulator is connected to both the first input end and the second input end of the first beam splitter, and the frequency modulator is configured to modulate the initial laser beam to generate the first laser beam and the second laser beam, emit the first laser beam to the first input end, and emit the second laser beam to the second input end. The frequency modulator is further configured to adjust the power of the at least one of the first laser beam and the second laser beam.

After the laser generates the initial laser beam, the frequency modulator modulates the initial laser beam to generate the first laser beam and the second laser beam. Therefore, a power jitter of the laser has same impact on the power of the two laser beams output by the frequency modulator, and the impact on the power of the two laser beams may cancel each other out. In this way, the impact of the power jitter of the laser on the power of the two laser beams incident to the first beam splitter can be avoided.

Optionally, the frequency modulator may include a signal source and an acousto-optic modulator. Both the laser and the signal source are connected to an input end of the acousto-optic modulator, and the signal source is configured to provide a modulation signal for the acousto-optic modulator. An output end of the acousto-optic modulator is connected to both the first input end and the second input end of the first beam splitter, and the acousto-optic modulator is configured to modulate, under the drive of the modulation signal, the initial laser beam to generate the first laser beam and the second laser beam, emit the first laser beam to the first input end, and emit the second laser beam to the second input end. The acousto-optic modulator is further configured to adjust power of the first laser beam and power of the second laser beam based on power of the modulation signal.

The absolute value of the frequency difference between the first laser beam and the second laser beam is equal to a frequency of the modulation signal or a multiple of a frequency of the modulation signal. Because the frequency difference between the two laser beams output by the acousto-optic modulator is determined based on the frequency of the modulation signal, in comparison with the solution using two lasers, in this solution, frequency control does not need to be performed on the laser, and only the frequency of the modulation signal provided by the signal source needs to be adjusted. This can effectively improve efficiency of adjusting the frequency difference.

Optionally, the frequency modulator includes a signal source, an electro-optic modulator, and an arrayed waveguide grating. Both the laser and the signal source are connected to an input end of the electro-optic modulator, and the signal source is configured to provide a modulation signal for the electro-optic modulator. An output end of the electro-optic modulator is connected to the arrayed waveguide grating, and the electro-optic modulator is configured to modulate the initial laser beam based on the modulation signal to generate a third laser beam that includes a carrier and at least one sideband, and adjust power of the carrier in the third laser beam and power of the sideband in the third laser beam based on power of the modulation signal. The arrayed waveguide grating is connected to both the first input end and the second input end of the first beam splitter, and may be configured to separate the first laser beam and the second laser beam from the third laser beam, emit the first laser beam to the first input end, and emit the second laser beam to the second input end.

The absolute value of the frequency difference between the first laser beam and the second laser beam may be equal to a frequency of the modulation signal or a multiple of a frequency of the modulation signal. Because a working frequency of an EOM may be usually greater than 10 GHz, the frequency of the modulation signal may be set to be relatively high, to ensure that the frequency is far greater than an upper limit of the response frequency range of the detector.

Optionally, the frequency modulator includes a second beam splitter, a signal source, an electro-optic modulator, and a filter. The laser is connected to an input end of the second beam splitter, a first output end of the second beam splitter is connected to the first input end of the first beam splitter, and a second output end of the second beam splitter is connected to an input end of the electro-optic modulator. The second beam splitter is configured to split the initial laser beam to generate the first laser beam and a fourth laser beam, emit the first laser beam to the first input end of the first beam splitter, and emit the fourth laser beam to the electro-optic modulator. The signal source is connected to the input end of the electro-optic modulator, and the signal source is configured to provide a modulation signal for the electro-optic modulator. An output end of the electro-optic modulator is connected to an input end of the filter, and the electro-optic modulator is configured to modulate the fourth laser beam based on the modulation signal to generate a fifth laser beam that includes a carrier and at least one sideband, and adjust power of the carrier in the fifth laser beam and power of the sideband in the fifth laser beam based on power of the modulation signal. An output end of the filter is connected to the second input end of the first beam splitter, and the filter is configured to filter the fifth laser beam to obtain the second laser beam, and emit the second laser beam to the second input end.

Because the filter has a higher clutter suppression ratio than the arrayed waveguide grating, monochromaticity of the second laser beam emitted by the filter is better ensured, and a phenomenon that interference occurs because the two laser beams have a same frequency component is avoided.

Optionally, the frequency of the modulation signal provided by the signal source may be greater than the upper limit of the response frequency range, for example, may be several times the upper limit of the response frequency range. This can effectively ensure that the detector does not respond to a beat frequency signal of the first laser beam and the second laser beam.

Optionally, the first laser beam and the second laser beam satisfy that the polarization directions are orthogonal, and the laser generation module may further include at least one of a first polarization controller and a second polarization controller. The first polarization controller is connected to the first input end of the first beam splitter, and may be configured to receive the first laser beam, adjust a polarization direction of the first laser beam, and output the first laser beam whose polarization direction is adjusted to the first input end. The second polarization controller is connected to the second input end of the first beam splitter, and may be configured to receive the second laser beam, adjust a polarization direction of the second laser beam, and output the second laser beam whose polarization direction is adjusted to the second input end.

The at least one of the first polarization controller and the second polarization controller is disposed in the laser generation module, so that the polarization direction of the laser beam emitted to the first beam splitter can be flexibly adjusted.

Optionally, the first laser beam and the second laser beam satisfy that the polarization directions are orthogonal, and the laser generation module includes a laser and a polarization beam splitter. The laser is connected to an input end of the polarization beam splitter, and the laser is configured to emit an initial laser beam to the polarization beam splitter and adjust a polarization state of the initial laser beam. An output end of the polarization beam splitter is connected to both the first input end and the second input end of the first beam splitter, and the polarization beam splitter is configured to perform polarization beam splitting on the initial laser beam to obtain the first laser beam and the second laser beam whose polarization directions are orthogonal, emit the first laser beam to the first input end, and emit the second laser beam to the second input end.

Because a structure of the polarization beam splitter is relatively simple and costs are relatively low, a structure of the laser generation module can be effectively simplified, and manufacturing costs of the laser generation module can be reduced.

Optionally, the laser generation module includes at least one of a third optical attenuator and a fourth optical attenuator. The third optical attenuator is connected to the first input end of the first beam splitter, and the third optical attenuator is configured to receive the first laser beam, adjust the power of the first laser beam, and output the first laser beam whose power is adjusted to the first input end. The fourth optical attenuator is connected to the second input end of the first beam splitter, and the fourth optical attenuator is configured to receive the second laser beam, adjust the power of the second laser beam, and output the second laser beam whose power is adjusted to the second input end.

Flexibility and precision of power adjustment of the laser beam can be further improved by adding the optical attenuator.

Optionally, the laser generation module may include L output ends, and the first beam splitter includes N input ends and M output ends, where L, N, and M are all positive integers greater than 2, and L is less than or equal to N; each output end of the laser generation module is connected to one input end of the first beam splitter, and the laser generation module is configured to emit a laser beam to the first beam splitter through each output end, where the first laser beam and the second laser beam are laser beams emitted by the laser generation module through two output ends of the L output ends; the first input end and the second input end of the first beam splitter are two input ends of the N input ends, and the first beam splitter is configured to split N laser beams received through the N input ends into M laser beams; and two output ends of the M output ends of the first beam splitter are connected to the detector, or the quantum random number generator includes a plurality of detectors and a plurality of processing modules that are one-to-one connected to the plurality of detectors, and an input end of each detector is connected to two output ends of the M output ends.

According to another aspect, this application provides a key generation system. The key generation system may include a key generation apparatus and the quantum random number generator according to the foregoing aspect. The quantum random number generator is connected to the key generation apparatus, and the quantum random number generator is configured to send a random number to the key generation apparatus. The key generation apparatus is configured to generate a key based on the random number.

In conclusion, embodiments of the present invention provide the quantum random number generator and the key generation system. The quantum random number generator includes the laser generation module, the first beam splitter, the detector, and the processing module. The laser generation module emits two laser beams to the first beam splitter, and power of at least one of the two laser beams is adjustable. Therefore, when the split ratio of the first beam splitter is deviated or detection efficiency of the detector for the two laser beams is deviated, the power of the at least one laser beam may be adjusted, so that the average value of the detection result output by the detector is close to 0. This can avoid impact of a deviation of the split ratio of the beam splitter on the detection result of the detector, and ensure reliability of the detection result, so that the processing module can directly generate the random number based on the detection result without first processing a direct current bias in the detection result. This effectively improves efficiency of the quantum random number generator in generating the random number.

In addition, because the two laser beams output by the laser generation module satisfy at least one of the following conditions: the absolute value of the frequency difference is beyond the response frequency range of the detector and the polarization directions are orthogonal, interference between the two laser beams can be avoided, or even if interference occurs, an interference signal cannot be detected by the detector. This can avoid impact of the interference signal on the detection result.

## BRIEF DESCRIPTION OF DRAWINGS

FIG. 1 is a schematic diagram of a structure of a quantum random number generator in a related technology;

FIG. 2 is a schematic diagram of a structure of a quantum random number generator according to an embodiment of the present invention;

FIG. 3 is a schematic diagram of a structure of a detector according to an embodiment of the present invention;

FIG. 4 is a schematic diagram of a frequency response curve of a detector according to an embodiment of the present invention;

FIG. 5 is a schematic diagram of a structure of another detector according to an embodiment of the present invention;

FIG. 6 is a schematic diagram of a structure of still another detector according to an embodiment of the present invention;

FIG. 7 is a schematic diagram of a structure of another quantum random number generator according to an embodiment of the present invention;

FIG. 8 is a schematic diagram of a structure of still another quantum random number generator according to an embodiment of the present invention;

FIG. 9 is a schematic diagram of a structure of yet another quantum random number generator according to an embodiment of the present invention;

FIG. 10 is a schematic diagram of a structure of yet another quantum random number generator according to an embodiment of the present invention;

FIG. 11 is a schematic diagram of a structure of yet another quantum random number generator according to an embodiment of the present invention;

FIG. 12 is a schematic diagram of a working principle of an acousto-optic modulator according to an embodiment of the present invention;

FIG. 13 is a schematic diagram of a structure of yet another quantum random number generator according to an embodiment of the present invention;

FIG. 14 is a schematic diagram of a structure of yet another quantum random number generator according to an embodiment of the present invention;

FIG. 15 is a schematic diagram of a working principle of an electro-optic modulator according to an embodiment of the present invention;

FIG. 16 is a schematic diagram of a structure of yet another quantum random number generator according to an embodiment of the present invention;

FIG. 17 is a schematic diagram of a structure of yet another quantum random number generator according to an embodiment of the present invention;

FIG. 18 is a schematic diagram of a structure of yet another quantum random number generator according to an embodiment of the present invention;

FIG. 19 is a schematic diagram of a structure of yet another quantum random number generator according to an embodiment of the present invention;

FIG. 20 is a schematic diagram of a structure of yet another quantum random number generator according to an embodiment of the present invention;

FIG. 21 is a schematic diagram of a structure of yet another quantum random number generator according to an embodiment of the present invention;

FIG. 22 is a schematic diagram of a structure of yet another quantum random number generator according to an embodiment of the present invention;

FIG. 23 is a schematic diagram of a structure of yet another quantum random number generator according to an embodiment of the present invention;

FIG. 24 is a schematic diagram of a structure of yet another quantum random number generator according to an embodiment of the present invention; and

FIG. 25 is a schematic diagram of a structure of a key generation system according to an embodiment of the present invention.

## DESCRIPTION OF EMBODIMENTS

The following describes in detail a quantum random number generator and a key generation system provided in the embodiments of this application with reference to the accompanying drawings.

The random number generator is widely used in various fields. For example, in the field of password security, the random number generator is a core component of an encryption system, and is usually used to generate a session key and an apparatus key, and set a random number and various initial vectors in a security protocol. In the field of cloud computing, the random number generator can meet application requirements of random numbers on a large quantity of user virtual machines. In the field of information security, the random number generator may be used to generate a random verification code for website identity verification, a random key for a secure network, and the like. In the field of quantum communications, the random number generator is used for random key generation, random selection in a decoy state, random selection of coding and measurement bases, phase randomization, and a random rearrangement algorithm in a post-processing program. In the field of computing science, generation and verification of a random number are an important part of the Monte Carlo method, and the random number is often used in numerical simulation and machine learning. In the field of industrial production, the random number generator may be used for random sampling detection in statistical sampling detection. This helps reduce detection costs and ensures detection reliability.

The quantum random number generator is a component that generates a random number based on a quantum random entropy source, and has relatively high random number generation efficiency. Vacuum field fluctuation is also referred to as shot noise in a vacuum state, where the shot noise in the vacuum state obeys Gaussian distribution and is a quantum random entropy source with excellent performance. The shot noise in the vacuum state is a very weak signal. Currently, a homodyne detection technology is usually used to detect the shot noise in the vacuum state, to generate a random number.

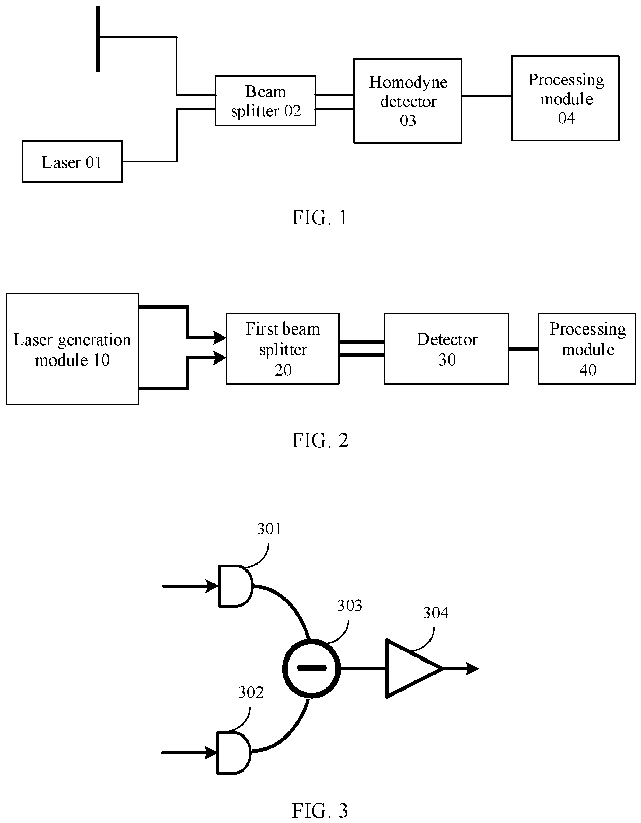

Referring to FIG. 1, the quantum random number generator that uses the homodyne detection technology may include a laser 01, a beam splitter 02, a homodyne detector 03, and a processing module 04. A laser beam output by the laser 01 is emitted to an input end of the beam splitter 02 as local oscillator light, and the other input end of the beam splitter 02 is floating, to detect a to-be-measured light field state, for example, may detect shot noise in a vacuum state. The beam splitter 02 may split a received signal into two laser beams with equal power, and output the two laser beams to the homodyne detector 03. The homodyne detector 03 may convert each received laser beam into an electronic signal, calculate a difference between two electronic signals, and output a detection result to the processing module 04. A value of the detection result is directly proportional to a value of the difference between the two electronic signals. Subsequently, after the processing module 04 samples and performs correlation processing on the detection result output by the homodyne detector 03, a random number may be generated.

For the quantum random number generator shown in FIG. 1, when a split ratio of the beam splitter 02 is 1:1, an expression of the detection result $\Delta I$ output by the homodyne detector 03 may satisfy the following:

$$\Delta I \propto |\alpha_{LO}|(x\cos(\theta)+p\sin(\theta))$$

$\propto$ represents "directly proportional to", $|\alpha_{LO}|$ represents power (which may also be referred to as intensity) of the local oscillator light, $\theta$ represents a phase difference between the local oscillator light and the to-be-measured light field state, and $x$ and $p$ represent two regular components of the to-be-measured light field state. When the to-be-measured light field state is the vacuum state, the phase difference $\theta$ may be 0. In this case, the detection result output by the homodyne detector 03 is directly proportional to a regular component ($x$) of the to-be-measured light field state, and a detection result of the regular component ($x$) may be referred to as the shot noise in the vacuum state or vacuum state shot noise. The detection result is random, and randomness is ensured according to a quantum measurement collapse principle. In addition, probability distribution of the detection result may be Gaussian distribution with an average value of 0 and a variance of one vacuum noise unit. It can be learned from the foregoing expression that the local oscillator light output by the laser 01 can amplify the shot noise in the vacuum state, to ensure that the shot noise can be effectively detected.

When the split ratio of the beam splitter 02 is deviated and is not 1:1, the detection result $\Delta I$ output by the homodyne detector 03 may be approximately expressed as:

$$\Delta I \propto |\alpha_{LO}|(x\cos(\theta)+p\sin(\theta))+\Delta(\alpha_{LO})^2$$

$\Delta(\alpha_{LO})^2$ represents a power difference between the two laser beams output by the beam splitter 02.

Referring to the foregoing two expressions, it can be learned that the average value of the detection result output by the homodyne detector 03 is directly proportional to the power difference between the two laser beams output by the beam splitter 02, and the variance of the detection result is directly proportional to a variance of the shot noise. Therefore, when the split ratio of the beam splitter 02 is 1:1, $\Delta(\alpha_{LO})^2$ is 0. In other words, the average value of the detection result output by the homodyne detector 03 is 0. However, when the split ratio of the beam splitter 02 is not 1:1, the power difference $\Delta(\alpha_{LO})^2$ between the two laser beams output by the beam splitter 02 is not 0, and the detection result output by the homodyne detector 03 includes a direct current bias.

It can be learned from the foregoing analysis that the solution in the related technology has a relatively high requirement on the split ratio of the beam splitter 02. When the split ratio of the beam splitter 02 is deviated, an absolute value of the average value of the detection result output by the homodyne detector 03 is relatively large. In other words, a direct current bias $\Delta(\alpha_{LO})^2$ exists in the output difference. When the random number is to be generated based on the detection result, the direct current bias in the detection result output by the detector 03 needs to be eliminated first, and then the random number is generated. Consequently, a random number generation method is relatively complex, and more seriously, due to the direct current bias, an amplifier in the homodyne detector 03 may be saturated and cannot normally work.

Embodiments of the present invention provide a quantum random number generator, to resolve a problem in a related technology that a quantum random number generator has a relatively high requirement on a split ratio of a beam splitter. FIG. 2 is a schematic diagram of a structure of a quantum random number generator according to an embodiment of the present invention. Referring to FIG. 2, the quantum random number generator may include a laser generation module 10, a first beam splitter 20, a detector 30, and a processing module 40.

The laser generation module 10 is connected to both a first input end and a second input end of the first beam splitter 20. The laser generation module 10 may be configured to emit a first laser beam to the first input end, emit a second laser beam to the second input end, and adjust power of at least one of the first laser beam and the second laser beam. For example, the power of the at least one laser beam is continuously adjustable. The first laser beam and the second laser beam may satisfy at least one of the following conditions: an absolute value of a frequency difference is beyond a response frequency range of the detector 30 and polarization directions are orthogonal. In the two laser beams emitted by the laser generation module 10, one laser beam may be used as local oscillator light, and the other laser beam may be used as compensation light. The laser generation module 10 may adjust at least power of the compensation light.

An output end of the first beam splitter 20 is connected to an input end of the detector 30. The first beam splitter 20 is configured to couple the received first laser beam and the received second laser beam to obtain two laser beams, and output the two laser beams to the detector 30.

An output end of the detector 30 is connected to the processing module 40. The detector 30 is configured to generate one electronic signal based on each received laser beam, determine a difference between two electronic signals, and send a detection result to the processing module 40. The processing module 40 is configured to generate a random number based on the detection result.

In this embodiment of the present invention, when the first input end of the first beam splitter 20 receives the first laser beam, and the second input end of the first beam splitter 20 is floating, the first beam splitter 20 may couple the first laser beam and shot noise that is detected through the second input end, to obtain two laser beams; and output the two laser beams to the detector 30. In addition, the two laser beams output by the first beam splitter 20 to the detector 30 further carry the shot noise detected through the second input end.

When the second input end of the first beam splitter 20 receives the second laser beam, and the first input end of the first beam splitter 20 is floating, the first beam splitter 20 may couple the second laser beam and shot noise that is detected through the first input end, to obtain two laser beams; and output the two laser beams to the detector 30. In addition, the two laser beams output by the first beam splitter 20 to the detector 30 may further carry the shot noise detected through the first input end.

When the first input end of the first beam splitter 20 receives the first laser beam, and the second input end of the first beam splitter 20 receives the second laser beam, the first beam splitter 20 actually couples the first laser beam, the second laser beam, shot noise near a frequency of the first laser beam, and shot noise near a frequency of the second laser beam to obtain two laser beams, and outputs the two laser beams to the detector 30. In addition, the two laser beams output by the first beam splitter 20 to the detector 30 further carry the shot noise near the frequency of the first laser beam and the shot noise near the frequency of the second laser beam.

It can be learned from the foregoing analysis that when detecting the two received laser beams, the detector 30 may further detect the shot noise near the frequency of the first laser beam and the shot noise near the frequency of the second laser beam. In addition, an average value of the detection result output by the detector 30 may be directly proportional to the difference between the two electronic signals, to be specific, a power difference between the two laser beams output by the first beam splitter 20. A variance of the detection result may be directly proportional to a variance of the shot noise near frequencies of the two laser beams emitted by the laser generation module 10.

In this embodiment of the present invention, when the two laser beams emitted by the laser generation module 10 satisfy that the absolute value of the frequency difference is beyond the response frequency range of the detector 30, a beat frequency signal (also referred to as an interference signal) of the two laser beams is not detected by the detector 30. In other words, a response of the detector to the beat frequency signal may be far less than a response to the shot noise. Therefore, impact of the beat frequency signal on the detection result of the detector can be avoided. When the two laser beams emitted by the laser generation module 10 satisfy that the polarization directions are orthogonal, the two laser beams do not generate a beat frequency signal. In other words, coherent superposition does not occur on the two laser beams. Therefore, accuracy of the detection result of the detector can also be ensured.

In the quantum random number generator provided in this embodiment of the present invention, because the laser generation module 10 may adjust the power of the at least one of the two laser beams emitted by the laser generation module 10, when a split ratio of the first beam splitter is deviated, and consequently, an absolute value of the average value of the detection result output by the detector is relatively large (in other words, there is a direct current bias), the laser generation module 10 may adjust the power of the at least one laser beam, so that the average value of the detection result output by the detector is close to 0. In other words, the laser generation module 10 adjusts the power of the at least one laser beam, so that impact of the deviation of the split ratio of the beam splitter on the detection result of the detector 30 can be avoided.

In conclusion, this embodiment of the present invention provides the quantum random number generator. The laser generation module in the quantum random number generator may emit the first laser beam and the second laser beam to the first beam splitter, and may adjust the power of the at least one of the first laser beam and the second laser beam. Therefore, when the split ratio of the first beam splitter is deviated, and consequently, the absolute value of the average value of the detection result output by the detector is relatively large, the laser generation module may adjust the power of the at least one laser beam, so that the average value of the detection result output by the detector is close to 0. The impact of the deviation of the split ratio of the first beam splitter on the detection result of the detector is effectively reduced, and reliability of the detection result is ensured. Further, the processing module may directly generate the random number based on the detection result, and does not need to process the direct current bias in the detection result first. This effectively improves efficiency of the quantum random number generator in generating the random number.

In addition, in the solution provided in this embodiment of the present invention, the laser generation module may adjust the power of the laser beam before emitting the laser beam to the first beam splitter, and the first beam splitter may split, based on the split ratio of the first beam splitter, the two laser beams emitted by the laser generation module, and then output the two laser beams. Therefore, a variation amount of the power difference between the two laser beams output by the first beam splitter is less than an amount of adjusting the power of the laser beam by the laser generation module. In addition, when the adjustment amount is a fixed value, as the split ratio of the first beam splitter is closer to 1:1 (in other words, the deviation is smaller), the variation amount of the power difference between the two laser beams output by the first beam splitter is smaller. Therefore, in this case, even if a step value of power adjustment of the laser generation module is relatively large, fine adjustment of the power difference between the two laser beams output by the first beam splitter can be implemented. In other words, in the solution provided in this application, a requirement on precision of the power adjustment of the laser generation module can be reduced, and a probability of over-adjustment or under-adjustment in a power adjustment process can be effectively reduced.

It can be learned from the foregoing analysis that, in the solution provided in this application, a requirement on the split ratio of the first beam splitter is reduced, and the requirement on the precision of the power adjustment of the laser generation module is also relatively low. Therefore, design difficulty and manufacturing difficulty of the quantum random number generator can be effectively reduced.

In this embodiment of the present invention, the first beam splitter 20 is an optical splitting component, and may have two input ends and two output ends. The first beam splitter 20 can couple two incident laser beams, and output two coupled signals through the two output ends. In this embodiment of the present invention, the split ratio of the first beam splitter 20 is 1:1 in an ideal state. In other words, in the ideal state, power of the two laser beams output by the two output ends of the first beam splitter 20 is equal. When impact of factors such as a process, a material, and use duration is considered, it cannot be ensured that the split ratio of the first beam splitter 20 is strictly 1:1. When the split ratio of the first beam splitter 20 is deviated, the laser generation module 10 may adjust the power of the at least one laser beam emitted by the laser generation module 10, to eliminate the impact of the deviation of the split ratio.

Certainly, the first beam splitter 20 may alternatively have more than three input ends and/or more than three output ends. This is not limited in this embodiment of the present invention.

In this embodiment of the present invention, the detector 30 may be a homodyne detector. Because the shot noise needs to be detected, it needs to be ensured that electronic noise of the homodyne detector is low enough and an amplification degree is high enough. FIG. 3 is a schematic diagram of a structure of a detector according to an embodiment of the present invention. Referring to FIG. 3, the detector 30 may include a first photoelectric detector 301, a second photoelectric detector 302, a subtractor 303, and an amplifier 304.

The first photoelectric detector 301 is connected to both an output end of the first beam splitter 20 and an input end of the subtractor 303. The first photoelectric detector 301 is configured to generate one electronic signal based on one of the two laser beams output by the first beam splitter 20. In other words, the first photoelectric detector 301 detects power of one of the two laser beams.

The second photoelectric detector 302 is connected to both the other output end of the first beam splitter 20 and the other input end of the subtractor 303. The second photoelectric detector 302 is configured to generate one electronic signal based on the other laser beam of the two laser beams output by the first beam splitter 20. In other words, the second photoelectric detector 302 detects power of the other laser beam.

An output end of the subtractor 303 is connected to an input end of the amplifier 304, and the subtractor 303 is configured to calculate a difference between the two electronic signals, and output the difference to the amplifier 304.

An output end of the amplifier 304 is connected to the processing module 40. The amplifier 304 is configured to amplify the difference, and output an amplified difference (namely, the detection result) to the processing module 40.

For example, the amplifier 304 may be an operational amplifier (OP for short) or a trans-impedance amplifier (trans-impedance amplifier, TIA).

In this embodiment of the present invention, when no direct current bias exists in the detection result output by the detector 30, the detection result is superposition of the shot noise near the frequency of the first laser beam and the shot noise near the frequency of the second laser beam. The detection result has true randomness, and a true random number may be generated based on the detection result.

Optionally, because the detection result output by the detector 30 is an analog signal, the processing module 40 may include a sampling component that can perform digital sampling on the analog signal. For example, the sampling component may be an analog-to-digital converter (analog-to-digital converter, ADC), a comparator, a comparator array, an oscilloscope, or the like.

The sampling component may sample the analog signal output by the detector 30, and may output a sampling result in a specific time period as a random number, or directly output a sampling result as a random number.

Alternatively, the processing module 40 may further include a post-processing circuit connected to the sampling component. The post-processing circuit may further process, by using a preset processing algorithm, a sampling result output by the sampling component, to generate a random number. For example, the post-processing circuit may perform processing such as an exclusive OR operation, a truncation operation, or Toeplitz (Toeplitz) matrix extraction on the sampling result. Optionally, the post-processing circuit may be a field programmable gate array (field programmable gate array, FPGA), a digital signal processing (digital signal processing, DSP) circuit, a central processing unit (central processing unit, CPU), or the like.

It should be noted that, based on the foregoing analysis of a working principle of the detector 30, to ensure that the average value of the detection result output by the detector 30 is close to 0 as much as possible, it also needs to ensure that photoelectric detection efficiency of the detector 30 for the two laser beams output by the first beam splitter 20 is consistent. In other words, it needs to be ensured that the first photoelectric detector 301 and the second photoelectric detector 302 have consistent photoelectric efficiency. When the split ratio of the first beam splitter 20 is deviated, and the photoelectric efficiency of the two photoelectric detectors in the detector 30 is also inconsistent, the laser generation module 10 may be used to adjust the power of the at least one of the two laser beams emitted by the laser generation module 10, to eliminate impact of the deviation of the split ratio and impact of the inconsistency of the photoelectric efficiency of the two photoelectric detectors.

However, if the photoelectric efficiency of the two photoelectric detectors is inconsistent, but the split ratio of the first beam splitter 20 is not deviated (in other words, the split ratio is 1:1), regardless how the laser generation module 10 adjusts the power of the two laser beams emitted by the laser generation module 10, the power difference between the two laser beams output by the first beam splitter 20 is not 0. In other words, in this case, the laser generation module 10 cannot eliminate the impact of the deviation of the photoelectric efficiency by adjusting the power of the laser beam emitted by the laser generation module 10. For this special case, when the quantum random number generator is designed, consistency of the photoelectric efficiency of the two photoelectric detectors in the detector 30 is ensured as much as possible. In addition, if the inconsistency of the photoelectric efficiency of the two photoelectric detectors in the detector 30 is relatively large, the split ratio of the first beam splitter may be set to a ratio with a specific deviation. For example, the split ratio of the first beam splitter may be designed to be 45:55. In this way, even if the photoelectric efficiency of the two photoelectric detectors in the detector 30 is inconsistent, the laser generation module 10 may be used to adjust the power of the at least one laser beam of the two laser beams emitted by the laser generation module 10, to eliminate the impact of the deviation of the split ratio and the deviation of the photoelectric efficiency of the two photoelectric detectors, and ensure that the average value of the detection result output by the detector 30 may be close to 0.

It can be learned from the foregoing analysis that the solution provided in this application can further reduce a requirement on consistency of the photoelectric efficiency of the two photoelectric detectors in the detector, so that a requirement on a manufacturing process of the detector can be reduced, and manufacturing difficulty and manufacturing costs of the detector are reduced.

It should be further noted that, in this embodiment of the present invention, the frequency of the laser beam may be a central frequency of the laser beam. Correspondingly, the frequency difference between the two laser beams may be a difference between central frequencies of the two laser beams.

It is assumed that a central frequency of the first laser beam is $\omega_1$, a line width is $\Delta\omega_1$, a central frequency of the second laser beam is $\omega_2$, and a line width is $\Delta\omega_2$. In this case, a peak value of a frequency spectrum of the beat frequency signal of the two laser beams is near a frequency $\Omega = |\omega_1 - \omega_2|$, a line width is approximately $\Delta\Omega = \Delta\omega_1 + \Delta\omega_2$, and the frequency $\Omega$ is a central frequency of the beat frequency signal. It is assumed that a frequency response function of the detector 30 is $H(f)$, and when $H(f) \leq H_{min}$, it is considered that the detector does not respond, where $H_{min}$ may be approximately equal to 0. In this embodiment of the present invention, that the absolute value $\Omega$ of the frequency difference between the two laser beams is beyond the response frequency range of the detector may mean that the absolute value $\Omega$ of the frequency difference satisfies $H(\Omega) \leq H_{min}$.

Because the beat frequency signal of the two laser beams further has a specific line width, to effectively ensure that the detector does not respond to the beat frequency signal, the line width $\Delta\Omega$ of the beat frequency signal may further satisfy $H(\Omega + \Delta\Omega/2) \leq H_{min}$ and $H(\Omega - \Delta\Omega/2) \leq H_{min}$. For example, near a frequency $\Omega$, a bandwidth in which the detector 30 does not respond may be far greater than the line width of the beat frequency signal.

Optionally, a type of the detector 30 may be a low-pass type, a band-pass type, or a multi-passband type. The low-pass detector responds to a signal whose frequency is less than or equal to a cut-off frequency $f_0$, but does not respond to a signal whose frequency is greater than the cut-off frequency $f_0$. Therefore, for the low-pass detector, the absolute value of the frequency difference between the two laser beams emitted by the laser generation module 10 may be greater than the cut-off frequency $f_0$.

The band-pass detector responds to a signal whose frequency is greater than or equal to a low-frequency cut-off frequency $f_1$ and less than or equal to a high-frequency cut-off frequency $f_0$, but does not respond to a signal whose frequency is less than the low-frequency cut-off frequency $f_1$ or greater than the high-frequency cut-off frequency $f_0$. Therefore, for the band-pass detector, the absolute value of the frequency difference between the two laser beams emitted by the laser generation module 10 may be greater than the high-frequency cut-off frequency $f_0$ or less than the low-frequency cut-off frequency $f_1$.

A response frequency range of the multi-passband detector may include a plurality of discontinuous frequency ranges. Therefore, for the multi-passband detector, the absolute value of the frequency difference between the two laser beams emitted by the laser generation module 10 may be located between two adjacent passbands, or may be greater than a maximum cut-off frequency, or may be less than a minimum cut-off frequency.

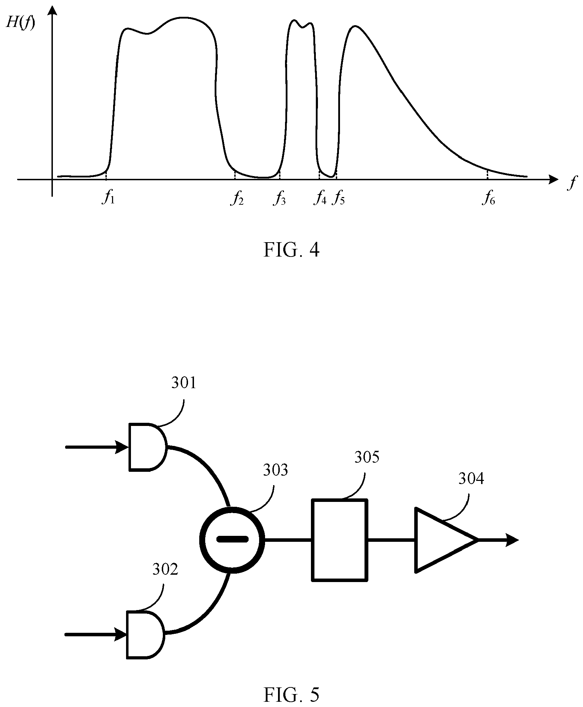

For example, FIG. 4 is a schematic diagram of a frequency response curve of a multi-passband detector according to an embodiment of the present invention. Referring to FIG. 4, it can be learned that a response frequency range of the detector may include $[f_1, f_2]$, $[f_3, f_4]$, and $[f_5, f_6]$. In this case, the absolute value of the frequency difference between the two laser beams emitted by the laser generation module 10 may be less than $f_1$, or may be greater than $f_2$ and less than $f_3$, or may be greater than $f_4$ and less than $f_5$, or may be greater than $f_6$.

In this embodiment of the present invention, to ensure that the detector 30 does not respond to the beat frequency signal of the two laser beams emitted by the laser generation module 10, the absolute value of the frequency difference between the two laser beams emitted by the laser generation module 10 may be greater than an upper limit of the response frequency range of the detector 30, and may be far greater than the upper limit of the response frequency range. For example, it is assumed that the upper limit of the response frequency range of the detector 30 is 10 GHz (GHz), and the absolute value of the frequency difference between the two laser beams emitted by the laser generation module 10 may be 50 GHz.

Optionally, referring to FIG. 5, the detector 30 may further include a high-pass filter 305. The high-pass filter 305 may be connected to both the output end of the subtractor 303 and the input end of the amplifier 304. The high-pass filter 305 is configured to filter the difference between the electronic signals obtained by the subtractor 303 through calculation, and output the filtered difference to the amplifier 304. The high-pass filter 305 may filter out a direct current signal or a low-frequency signal, to reduce the direct current bias in the detection result output by the detector 30.

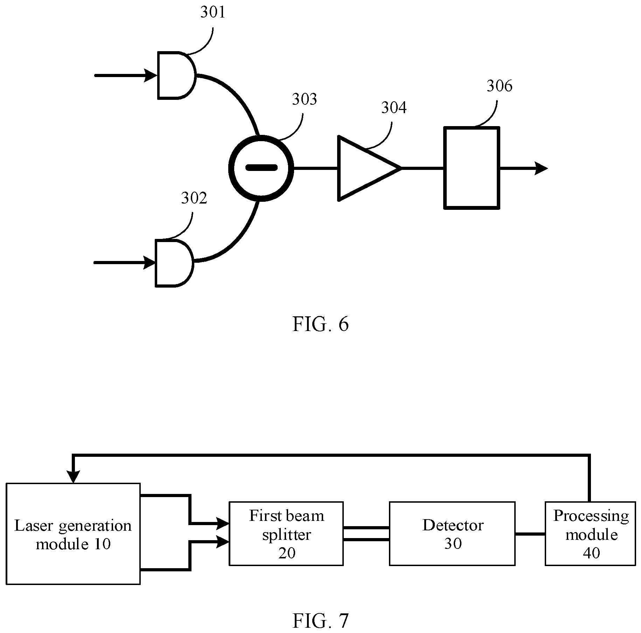

Alternatively, referring to FIG. 6, the detector 30 may further include a band-pass filter 306. The band-pass filter 306 is connected to both the output end of the amplifier 304 and the processing module 40. The band-pass filter 306 is configured to filter the difference amplified by the amplifier 304, to obtain the detection result, and outputs the detection result to the processing module 40. The band-pass filter 306 may reduce high-frequency oscillation, and can also achieve an effect of reducing the direct current bias in the detection result.

Referring to FIG. 7, the processing module 40 may be further connected to the laser generation module 10, and may be configured to perform digital sampling on the detection result output by the detector 30, obtain the average value of the detection result through calculation, and then send the average value of the detection result to the laser generation module 10. It should be understood that the processing module 40 may set a time period, and average sampled data in the time period. Alternatively, the processing module 40 may set a sampling quantity, and average sampling points each time sampling points of the sampling quantity are collected. In addition, a functional module for averaging may also be integrated into the detector 30, and this is not limited in this application.

Optionally, the quantum random number generator may further include a low-pass filter. The detector 30 divides the output detection result into two parts (for example, through an operation by a beam splitter), one part is sent to the processing module 40, and the other part is sent to the low-pass filter. The low-pass filter performs low-pass filtering on the detection result to obtain an average value of the detection result, and sends the average value to the laser generation module 10. It should be understood that the low-pass filter may be integrated into the detector 30, or may be integrated into the processing module 40, or may be independent of the detector 30 and the processing module 40. This is not limited in this application.

The laser generation module 10 may adjust the power of the at least one of the first laser beam and the second laser beam based on the received average value of the detection result, until the absolute value of the average value of the detection result is less than a difference threshold.

The laser generation module 10 adaptively adjusts the power of the laser beam based on the average value that is of the detection result and that is fed back by the processing module 40, to ensure efficiency and reliability of the laser generation module in adjusting the power.

Optionally, the difference threshold may be a threshold pre-stored on the laser generation module 10. After receiving the average value that is of the detection result and that is fed back by the processing module 40 or the low-pass filter, the laser generation module 10 may first detect whether the absolute value of the average value of the detection result is greater than the difference threshold. If the absolute value of the average value of the detection result is not greater than the difference threshold, it may be determined that the detector 30 can accurately detect the shot noise, and the power of the laser beam does not need to be adjusted. If the absolute value of the average value of the detection result is greater than the difference threshold, it may be determined that the split ratio of the first beam splitter 20 is deviated, or the photoelectric efficiency of the detector 30 is deviated, and the detector 30 cannot accurately detect the shot noise. Therefore, the power of the at least one of the first laser beam and the second laser beam may be adjusted.

For example, the laser generation module 10 may adjust power of one laser beam in an adjustment direction of power increase or decrease, and then may detect whether an absolute value of an average value that is of the detection result and that is received after the power adjustment is less than the absolute value of the average value that is of the detection result and that is received before the power adjustment. If the absolute value of the average value that is of the detection result and that is received after the power adjustment is less than the absolute value of the average value that is of the detection result and that is received before the power adjustment, the laser generation module 10 may continue to adjust the power of the laser beam in a same adjustment direction until the absolute value of the average value that is of the detection result and that is fed back by the processing module 40 or the low-pass filter is less than the difference threshold. If the absolute value of the average value that is of the detection result and that is received after the power adjustment is greater than the absolute value of the average value that is of the detection result and that is received before the power adjustment, the laser generation module 10 may continue to adjust the power of the laser beam in an opposite adjustment direction, or adjust power of the other laser beam in a same adjustment direction, until the absolute value of the average value that is of the detection result and that is fed back by the processing module 40 or the low-pass filter is less than the difference threshold.

For example, the laser generation module 10 may first adjust (namely, increase) power of the second laser beam in the adjustment direction of power increase, and detect whether an absolute value of an average value that is of the detection result and that is fed back by the processing module 40 after the power adjustment is less than the average value that is of the detection result and that is fed back by the processing module 40 before the power adjustment. If the absolute value of the average value that is of the detection result and that is fed back by the processing module 40 after the power adjustment is less than the average value that is of the detection result and that is fed back by the processing module 40 before the power adjustment, the laser generation module 10 may continue to adjust power of the first laser beam in the adjustment direction of power increase, until the absolute value of the average value that is of the detection result and that is fed back by the processing module 40 is less than the difference threshold. If the absolute value of the average value that is of the detection result and that is fed back by the processing module 40 after the power adjustment is greater than the average value that is of the detection result and that is fed back by the processing module 40 before the power adjustment, the laser generation module 10 may adjust (namely, decrease) the power of the second laser beam in the adjustment direction of power decrease, or adjust the power of the first laser beam in the adjustment direction of power increase, until the absolute value of the average value that is of the detection result and that is fed back by the processing module 40 is less than the difference threshold.

In this embodiment of the present invention, in a process of adjusting the power, the laser generation module 10 may flexibly change the adjustment direction of the power based on a change of the absolute value of the average value of the detection result, to improve power adjustment efficiency.

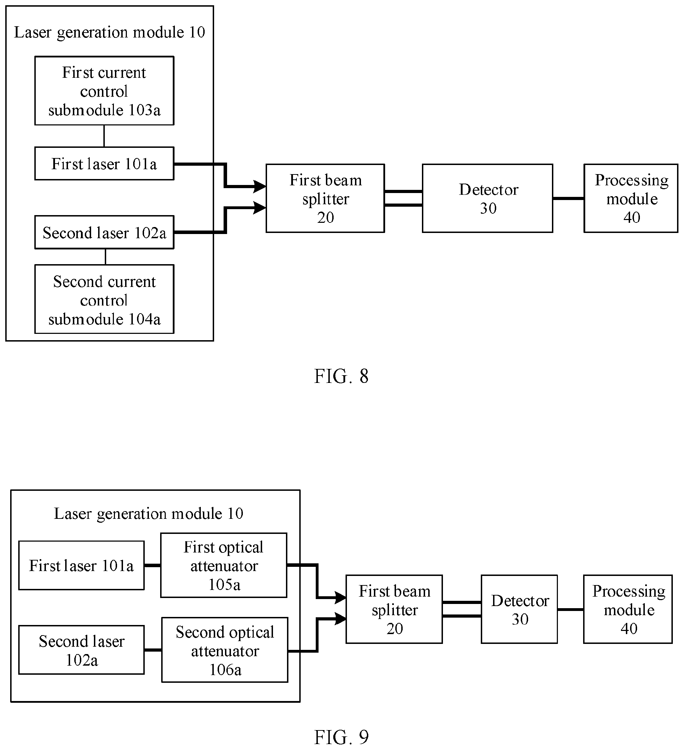

In an optional implementation of this embodiment of the present invention, referring to FIG. 8 and FIG. 9, the laser generation module 10 may include a first laser 101a, a second laser 102a, and a power adjustment sub module.

The first laser 101a is connected to the first input end of the first beam splitter 20, and the first laser 101a is configured to emit the first laser beam.

The second laser 102a is connected to the second input end of the first beam splitter 20, and the second laser 102a is configured to emit the second laser beam.

The power adjustment submodule is connected to at least one laser of the first laser 101a and the second laser 102a, and is configured to adjust power of a laser beam emitted by the laser connected to the power adjustment submodule.

A frequency of the first laser beam emitted by the first laser 101a may be different from a frequency of the second laser beam emitted by the second laser 102a (in other words, wavelengths of the two laser beams are different), and the absolute value of the frequency difference between the two laser beams is beyond the response frequency range of the detector. Alternatively, a polarization direction of the first laser beam emitted by the first laser 101a and a polarization direction of the second laser beam emitted by the second laser 102a may be orthogonal. Alternatively, the first laser beam emitted by the first laser 101a and the second laser beam emitted by the second laser 102a satisfy that the polarization directions are orthogonal and that the absolute value of the frequency difference is beyond the response frequency range of the detector.

The two lasers are disposed, and each laser emits one laser beam, so that flexibility in adjusting frequencies and the polarization directions of the two laser beams can be effectively improved.

Optionally, referring to FIG. 8, the power adjustment submodule may include at least one of a first current control submodule 103a and a second current control submodule 104a. For example, in a structure shown in FIG. 8, the power adjustment submodule includes the first current control submodule 103a and the second current control submodule 104a.

The first current control submodule 103a is connected to the first laser 101a, and the first current control submodule 103a may be configured to adjust a drive current of the first laser 101a.

The second current control submodule 104a is connected to the second laser 102a, and the second current control submodule 104a may be configured to adjust a drive current of the second laser 102a.

The power of the laser beam emitted by each laser may be positively correlated with a value of the drive current of the laser. In other words, a larger drive current indicates larger power of the laser beam emitted by the laser.

In this embodiment of the present invention, the first current control submodule 103a and the second current control submodule 104a may be two independent components, or may be integrated into one component. This is not limited in this embodiment of the present invention.

Optionally, referring to FIG. 9, the power adjustment submodule may include at least one of a first optical attenuator 105a and a second optical attenuator 106a. For example, in a structure shown in FIG. 9, the power adjustment submodule includes the first optical attenuator 105a and the second optical attenuator 106a.

The first optical attenuator 105a is connected to both the first laser 101a and the first input end of the first beam splitter 20, and the first optical attenuator 105a may be configured to adjust the power of the first laser beam emitted by the first laser 101a.

The second optical attenuator 106a is connected to both the second laser 102a and the second input end of the first beam splitter 20, and the second optical attenuator 106a may be configured to adjust the power of the second laser beam emitted by the second laser 102a.

The optical attenuator may also be referred to as an adjustable attenuator, and is a component configured to attenuate optical power. When the optical attenuator adjusts the power of the laser beam emitted by the laser, because power of the laser is not affected, impact on a frequency of the laser beam emitted by the laser can be avoided, and stability of power adjustment is relatively high.

In this embodiment of the present invention, the first optical attenuator 105a and the second optical attenuator 106a may be two independent components, or may be integrated into one component. This is not limited in this embodiment of the present invention.

It should be noted that, in this embodiment of the present invention, the power adjustment submodule may include both a current control submodule and an optical attenuator. For example, the power adjustment submodule may include the first current control submodule 103a and the first optical attenuator 105a that are connected to the first laser 101a; or may include the first current control submodule 103a that is connected to the first laser 101a, and the second optical attenuator 106a that is connected to the second laser 102a.

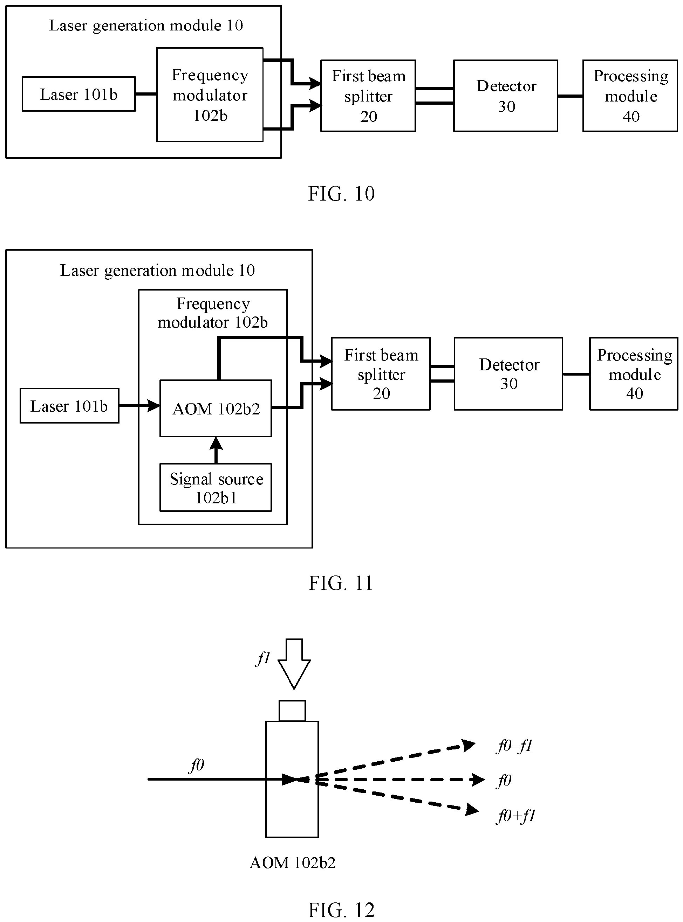

In another optional implementation of this embodiment of the present invention, as shown in FIG. 10, the laser generation module 10 may include a laser 101b and a frequency modulator 102b.

The laser 101b is connected to an input end of the frequency modulator 102b, and the laser 101b is configured to emit an initial laser beam to the frequency modulator 102b.

An output end of the frequency modulator 102b is connected to both the first input end and the second input end of the first beam splitter 20. The frequency modulator 102b may be configured to modulate the initial laser beam to generate the first laser beam and the second laser beam, emit the first laser beam to the first input end, and emit the second laser beam to the second input end.

The frequency modulator 102b may be further configured to adjust the power of the at least one of the first laser beam and the second laser beam.

After the laser 101b generates the initial laser beam, the frequency modulator 102b modulates the initial laser beam to generate the first laser beam and the second laser beam. Therefore, a power jitter of the laser 101b has same impact on the power of the two laser beams output by the frequency modulator 102b, and the impact on the power of the two laser beams may cancel each other out. In this way, the impact of the power jitter of the laser 101b on the power of the two laser beams incident to the first beam splitter 20 can be avoided.

In an optional implementation, as shown in FIG. 11, the frequency modulator 102b may include a signal source 102b1 and an acousto-optic modulator (acousto-optical modulators, AOM) 102b2.

Both the laser 101b and the signal source 102b1 are connected to an input end of the AOM 102b2, and the signal source 102b 1 may be configured to provide a modulation signal for the AOM 102b2.

An output end of the AOM 102b2 is connected to both the first input end and the second input end of the first beam splitter 20, and the AOM 102b2 is configured to modulate, under the drive of the modulation signal, the initial laser beam to generate the first laser beam and the second laser beam, emit the first laser beam to the first input end, and emit the second laser beam to the second input end.

The AOM 102b2 may further adjust the power of the at least one of the first laser beam and the second laser beam based on power of the modulation signal.

The AOM 102b2 is a component that enables an incident initial laser beam to generate a frequency shift, and a structure of the AOM 102b2 mainly includes an acousto-optic medium and a piezoelectric transducer. When a modulation signal that has a specific frequency and that is provided by the signal source 102b1 drives the piezoelectric transducer, the piezoelectric transducer generates ultrasonic waves of a same frequency and transmits the ultrasonic waves to the acousto-optic medium. The ultrasonic waves enable a refractive index of the acousto-optic medium to change, to form a grating. The initial laser beam emitted by the laser 101b may form multi-order diffractive light after passing through the grating. A frequency of 0-order diffractive light in the multi-order diffractive light is the same as a frequency of the incident laser beam, and an absolute value of a frequency difference between diffractive light at every other two adjacent orders is equal to the frequency of the modulation signal. In addition, the multi-order diffractive light is separated in space. Therefore, the AOM 102b2 may select two laser beams (namely, the first laser beam and the second laser beam) from the multi-order diffractive light, and output the two laser beams to the first beam splitter 20. For example, the AOM 102b2 may select the two laser beams from the multi-order diffractive light, couple the two laser beams into an optical fiber, and transmit the two laser beams to the first beam splitter 20 through the optical fiber. Orders of the two laser beams selected by the AOM 102b2 from the multi-order diffractive light may be preset, for example, may be configured before delivery of the AOM 102b2, or may be preset by operating personnel.

For example, referring to FIG. 12, it is assumed that the frequency of the initial laser beam incident to the AOM 102b2 is $f0$ and the frequency of the modulation signal provided by the signal source 102b1 is $f1$. The multi-order diffractive light formed after the initial laser beam is diffracted by the grating may include: 0-order diffractive light with the frequency of $f0$, 1-order diffractive light with a frequency of $f0+f1$, and -1-order diffractive light with a frequency of $f0-f1$. Certainly, in addition to the diffractive light at the three orders shown in FIG. 12, the multi-order diffractive light may further include diffractive light at another order. Because power of the diffractive light at another order is usually relatively small, the diffractive light at another order is not shown. Similarly, to ensure power of a laser beam output by the AMO 102b2, the AOM 102b2 may select the 0-order diffractive light and the 1-order diffractive light as the first laser beam and the second laser beam, and output the first laser beam and the second laser beam to the first beam splitter 10. Alternatively, the AOM 102b2 may select the 0-order diffractive light and the -1-order diffractive light as the first laser beam and the second laser beam, and output the first laser beam and the second laser beam to the first beam splitter 10. Alternatively, the AOM 102b2 may select the 1-order diffractive light and the -1-order diffractive light as the first laser beam and the second laser beam, and output the first laser beam and the second laser beam to the first beam splitter 10.

It can be learned from the foregoing analysis that the absolute value of the frequency difference between the first laser beam and the second laser beam that are output by the AOM 102b2 is equal to the frequency of the modulation signal provided by the signal source 102b1, or is equal to a multiple of the frequency of the modulation signal. Therefore, to ensure that the absolute value of the frequency difference between the two laser beams output by the AOM 102b2 is beyond the response frequency range of the detector 30, for a scenario in which the two laser beams output by the AOM 102b2 are diffractive light at two adjacent levels in the multi-order diffractive light, the frequency of the modulation signal provided by the signal source 102b1 may be set to be beyond the response frequency range of the detector 30. For a scenario in which the two laser beams output by the AOM 102b2 are diffractive light at two non-adjacent orders in the multi-order diffractive light, the frequency of the modulation signal provided by the signal source 102b1 may be set to be greater than the upper limit of the response frequency range of the detector 30.

For example, to improve reliability and setting efficiency, whether the two laser beams output by the AOM 102b2 are diffractive light at adjacent orders may alternatively not be considered, the frequency of the modulation signal provided by the signal source 102b1 is directly set to a frequency value far greater than the upper limit of the response frequency range of the detector 30. For example, the frequency of the modulation signal may be 10 times the upper limit of the response frequency range of the detector 30.

For a structure shown in FIG. 11, power of the multi-order diffractive light formed after the initial laser beam passes through the grating may be controlled based on the power of the modulation signal provided by the signal source 102b1. Usually, larger power of the modulation signal indicates smaller power of the 0-order diffractive light in the multi-order diffractive light and larger power of diffractive light at another order. In addition, power distribution of the multi-order diffractive light may alternatively be adjusted by adjusting an incident angle at which the initial laser beam emitted by the laser 101b is incident to the AOM 102b2.

For example, when the power of the modulation signal is 0, there is only the 0-order diffractive light (namely, the initial laser beam is not diffracted) in the multi-order diffractive light. Larger power of the modulation signal indicates smaller power of the 0-order diffractive light and larger power of diffractive light at another order.

For the structure shown in FIG. 11, because the frequency difference between the two laser beams output by the AOM 102b2 is determined based on the frequency of the modulation signal, in comparison with the solution using two lasers, in this solution, frequency control does not need to be performed on the laser, and only the frequency of the modulation signal provided by the signal source needs to be adjusted. This can effectively improve efficiency of adjusting the frequency difference.

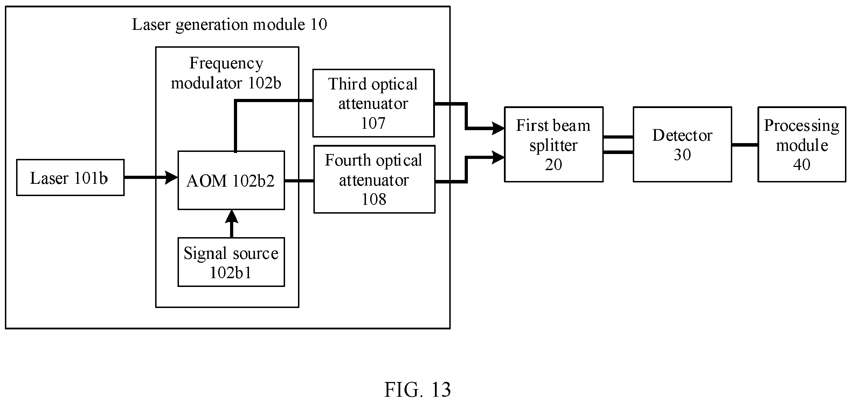

Optionally, referring to FIG. 13, the laser generation module 10 may further include at least one of a third optical attenuator 107 and a fourth optical attenuator 108. For example, the laser generation module 10 shown in FIG. 13 includes the third optical attenuator 107 and the fourth optical attenuator 108.

The third optical attenuator 107 may be connected to both the AMO 102b2 and the first input end of the first beam splitter 20, and the third optical attenuator 107 may be configured to receive the first laser beam output by the AMO 102b2, adjust the power of the first laser beam, and output the first laser beam whose power is adjusted to the first input end of the first beam splitter 20.

The fourth optical attenuator 108 may be connected to both the AMO 102b2 and the second input end of the first beam splitter 20, and the fourth optical attenuator 108 may be configured to receive the second laser beam output by the AMO 102b2, adjust the power of the second laser beam, and output the second laser beam whose power is adjusted to the second input end of the first beam splitter 20.

After the optical attenuator is added, a requirement of the signal source 102b1 on performance of adjusting the power of the modulation signal can be reduced. This further improves flexibility of adjusting the power of the laser beam and precision of power adjustment.

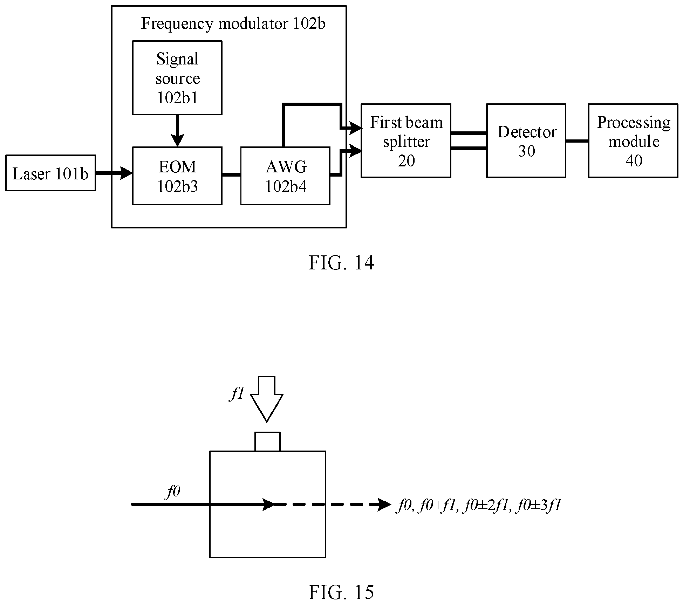

In another optional implementation, as shown in FIG. 14, the frequency modulator 102b may include a signal source 102b1, an electro-optic modulator (electro-optic modulator, EOM) 102b3, and an arrayed waveguide grating (arrayed waveguide gratings, AWG) 102b4.

Both the laser 101b and the signal source 102b1 are connected to an input end of the EOM 102b3, and the signal source 102b1 is configured to provide a modulation signal for the EOM 102b3.

An output end of the EOM 102b3 is connected to the AWG 102b4, and the EOM 102b3 is configured to modulate the initial laser beam based on the modulation signal to generate a third laser beam that includes a carrier and at least one sideband, and adjust power of the third laser beam based on power of the modulation signal. When the third laser beam includes one sideband, the third laser beam may be referred to as a single-sideband laser beam, and power of a carrier and a sideband of the single-sideband laser beam should not be 0. When the third laser beam includes a plurality of sidebands, the third laser beam may be referred to as a multi-sideband laser beam.

The AWG 102b4 is connected to both the first input end and the second input end of the first beam splitter 20, and the AWG 102b4 may separate the first laser beam and the second laser beam from the third laser beam, emit the first laser beam to the first input end, and emit the second laser beam to the second input end.

The third laser beam generated by the EOM 102b3 may include the carrier and the plurality of sidebands, and an absolute value of a frequency difference between a frequency of each sideband and a frequency of the carrier is a multiple of a frequency of the modulation signal. In addition, power of the carrier and power of each sideband may be adjusted by adjusting the power of the modulation signal. For example, that the power of the modulation signal provided by the signal source 102b1 is adjusted to be larger indicates smaller power of the carrier and larger power of the sideband.

In the third laser beam that is generated by the EOM 102b3 and that includes the carrier and the at least one sideband, the carrier and the plurality of sidebands overlap in space. Therefore, the carrier and each sideband need to be separated by using the AWG 102b4, to select the first laser beam and the second laser beam, and emit the first laser beam and the second laser beam to the first beam splitter 20. For example, the AWG 102b4 may select the first laser beam and the second laser beam from the multi-order diffractive light, couple the first laser beam and the second laser beam into an optical fiber, and transmit the first laser beam and the second laser beam to the first beam splitter 20 through the optical fiber. Frequencies of the two laser beams separated by the AWG 102b4 from the third laser beam may be preset, for example, may be configured before delivery of the AWG 102b4, or may be preset by operating personnel.

FIG. 15 is a schematic diagram of a working principle of an EOM according to an embodiment of the present invention. It is assumed that the frequency of the initial laser beam incident to the EOM 102b3 is $f0$, and the frequency of the modulation signal provided by the signal source 102b1 is $f1$. In this case, the frequency of the carrier in the third laser beam generated after the EOM 102b3 modulates the initial laser beam may be $f0$, and frequencies of the sidebands may include $f0+f1$, $f0-f1$, $f0+2f1$, $f0-2f1$, $f0+3f1$, $f0-3f1$, and the like. The AWG 102b4 may separate a first laser beam whose frequency is $f0$ and a first laser beam whose frequency is $f0+f1$ from the third laser beam.

In this implementation, to ensure that the absolute value of the frequency difference between the two laser beams output by the AWG 102b4 is beyond the response frequency range of the detector 30, the frequency of the modulation signal provided by the signal source 102b1 may be set to a frequency value greater than the upper limit of the response frequency range of the detector 30. Because a working frequency of the EOM may be usually greater than 10 GHz, the frequency of the modulation signal may be set to be relatively high, to ensure that the frequency is far greater than the upper limit of the response frequency range of the detector 30.

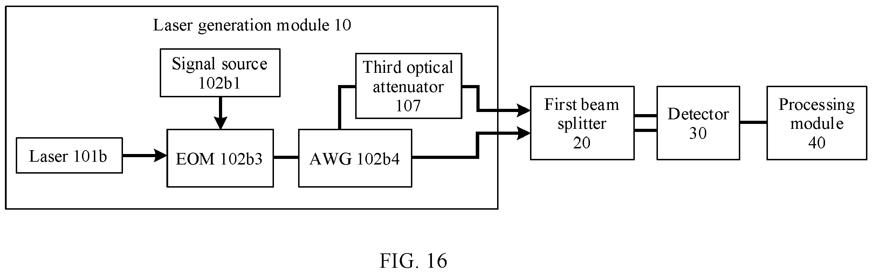

Optionally, referring to FIG. 16, the laser generation module 10 may further include at least one of a third optical attenuator 107 and a fourth optical attenuator 108. For example, the laser generation module 10 shown in FIG. 16 includes the third optical attenuator 107.

The third optical attenuator 107 may be connected to both the AWG 102b4 and the first input end of the first beam splitter 20, and the third optical attenuator 107 may be configured to receive the first laser beam output by the AWG 102b4, adjust the power of the first laser beam, and output the first laser beam whose power is adjusted to the first input end of the first beam splitter 20.

The fourth optical attenuator 108 may be connected to both the AWG 102b4 and the second input end of the first beam splitter 20. The fourth optical attenuator 108 may be configured to receive the second laser beam output by the AWG 102b4, adjust the power of the second laser beam, and output the second laser beam whose power is adjusted to the second input end of the first beam splitter 20.

After the optical attenuator is added, a requirement of the signal source 102b1 on performance of adjusting the power of the modulation signal can be reduced. This further improves flexibility of adjusting the power of the laser beam and precision of power adjustment. For example, the signal source 102b1 is enabled to provide a modulation signal of fixed power and frequency, to ensure that a ratio of power of the two laser beams output by the AWG 102b4 remains fixed, and then power of at least one laser beam may be adjusted by using only the optical attenuator.

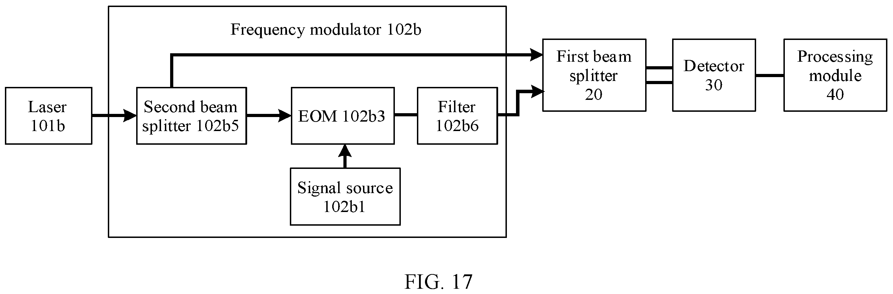

In still another optional implementation, as shown in FIG. 17, the frequency modulator 102b may include a second beam splitter 102b5, a signal source 102b1, an EOM 102b3, and a filter 102b6.

The laser 101b is connected to an input end of the second beam splitter 102b5, and a first output end of the second beam splitter 102b5 is connected to the first input end of the first beam splitter 20, and a second output end of the second beam splitter 102b5 is connected to an input end of the EOM 102b3. The second beam splitter 102b5 is configured to split the initial laser beam to generate the first laser beam and a fourth laser beam, emit the first laser beam to the first input end of the first beam splitter 20, and emit the fourth laser beam to the EOM 102b3. A working principle of the second beam splitter 102b5 is the same as that of the first beam splitter 20. Details are not described herein again.

The signal source 102b1 is connected to the input end of the EOM 102b3, and the signal source 102b1 may be configured to provide a modulation signal for the EOM 102b3.

An output end of the EOM 102b3 is connected to an input end of the filter 102b6. The EOM 102b3 may be configured to modulate the fourth laser beam based on the modulation signal to generate a fifth laser beam that includes a carrier and at least one sideband, and adjust power of the carrier in the fifth laser beam and power of the sideband in the fifth laser beam based on power of the modulation signal. When the fifth laser beam includes one sideband, the fifth laser beam may be referred to as a single-sideband laser beam, power of a carrier in the single-sideband laser beam may be 0 or may not be 0, and power of the sideband should not be 0. When the fifth laser beam includes a plurality of sidebands, the fifth laser beam may be referred to as a multiband laser beam.

An output end of the filter 102b6 is connected to the second input end of the first beam splitter 20. The filter 102b6 may be configured to filter the fifth laser beam to obtain the second laser beam, and emit the second laser beam to the second input end of the first beam splitter 20.

The filter 102b6 enables a laser beam that is in the fifth laser beam and whose frequency is within a passband range of the filter 102b6 to pass through, and filters out another laser beam whose frequency is beyond the passband range of the filter 102b6. The passband range of the filter 102b6 may be preset based on the frequency of the initial laser beam emitted by the laser 101b. It needs to be ensured that an absolute value of a frequency difference between the second laser beam obtained after the filter 102b6 filters the fifth laser beam and the first laser beam output by the second beam splitter 102b5 is beyond the response frequency range of the detector 30.

Because the filter has a higher clutter suppression ratio than the AWG, monochromaticity of the second laser beam emitted by the filter is better ensured, and a phenomenon that interference occurs because the two laser beams have a same frequency component is avoided.

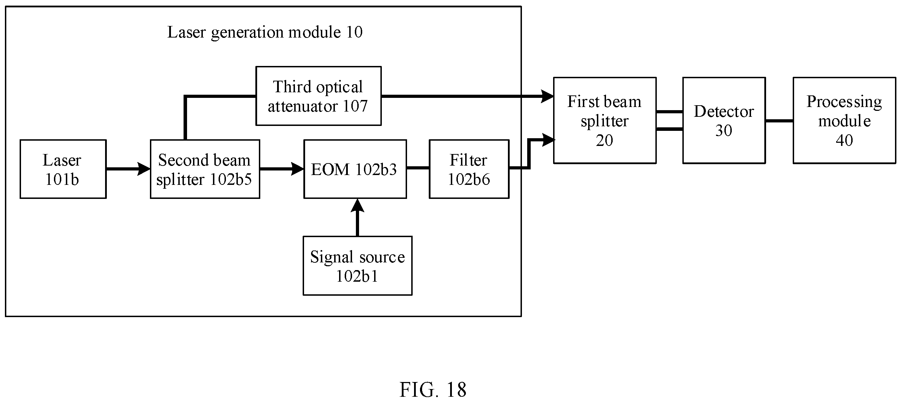

Optionally, referring to FIG. 18, the laser generation module 10 may further include at least one of a third optical attenuator 107 and a fourth optical attenuator 108. For example, the laser generation module 10 shown in FIG. 18 includes the third optical attenuator 107.

The third optical attenuator 107 may be connected to both the first output end of the second beam splitter 102b5 and the first input end of the first beam splitter 20. The third optical attenuator 107 may be configured to receive the first laser beam output by the second beam splitter 102b5, adjust the power of the first laser beam, and output the first laser beam whose power is adjusted to the first input end of the first beam splitter 20.

The fourth optical attenuator 108 may be connected to both the output end of the filter 102b6 and the second input end of the first beam splitter 20. The fourth optical attenuator 108 may be configured to receive the second laser beam output by the filter 102b6, adjust the power of the second laser beam, and output the second laser beam whose power is adjusted to the second input end of the first beam splitter 20.

After the optical attenuator is added, a requirement of the signal source 102b1 on performance of adjusting the power of the modulation signal can be reduced. This further improves flexibility of adjusting the power of the laser beam and precision of power adjustment.

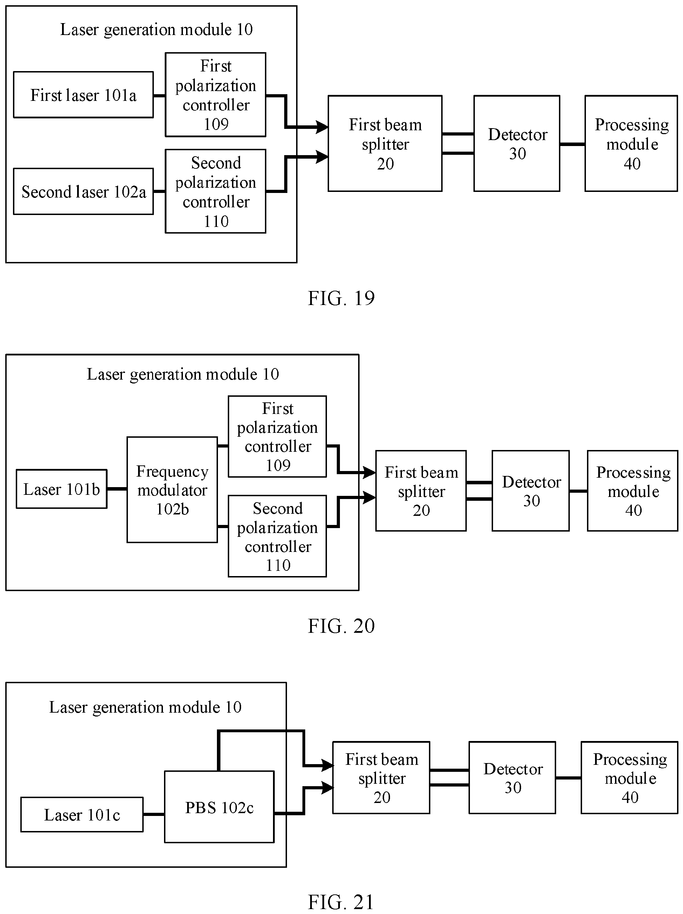

Optionally, based on the structure of the laser generation module 10 provided in the foregoing embodiment, referring to FIG. 19 and FIG. 20, the laser generation module 10 may further include at least one of a first polarization controller 109 and a second polarization controller 110. For example, in structures shown in FIG. 19 and FIG. 20, the laser generation module 10 includes the first polarization controller 109 and the second polarization controller 110.

The first polarization controller 109 may be connected to the first input end of the first beam splitter 20. The first polarization controller 109 is configured to receive the first laser beam, adjust a polarization direction of the first laser beam, and output the first laser beam whose polarization direction is adjusted to the first input end.

The second polarization controller 110 is connected to the second input end of the first beam splitter 20. The second polarization controller 110 is configured to receive the second laser beam, adjust a polarization direction of the second laser beam, and output the second laser beam whose polarization direction is adjusted to the second input end.

For example, referring to FIG. 19, the first polarization controller 109 may be connected to both an output end of the first laser 101a and the first input end of the first beam splitter 20, and the first polarization controller 109 may adjust the polarization direction of the first laser beam output by the first laser 101a. The second polarization controller 110 may be connected to both an output end of the second laser 102a and the second input end of the first beam splitter 20, and the second polarization controller 110 may adjust the polarization direction of the second laser beam output by the second laser 102a.

Alternatively, referring to FIG. 20, the first polarization controller 109 may be connected to both one output end of the frequency modulator 102b and the first input end of the first beam splitter 20, and the first polarization controller 109 may adjust the polarization direction of the first laser beam output by the frequency modulator 102b. The second polarization controller 110 may be connected to both the other output end of the frequency modulator 102b and the second input end of the first beam splitter 20, and the second polarization controller 110 may adjust the polarization direction of the second laser beam output by the frequency modulator 102b.

The at least one of the first polarization controller 109 and the second polarization controller 110 is disposed in the laser generation module 10, so that the polarization direction of the laser beam emitted to the first beam splitter 20 can be flexibly adjusted. In this way, it can be ensured that the absolute value of the frequency difference between the first laser beam and the second laser beam that are emitted to the first beam splitter 20 is beyond the response frequency range of the detector 30, and the condition that the polarization directions are orthogonal can be satisfied. This effectively avoids interference caused by the beat frequency signal of the two laser beams to the detection result of the detector 30, ensures reliability of the detection result of the detector 30, and further improves reliability of the quantum random number generator.

In this embodiment of the present invention, the first polarization controller 109 and the second polarization controller 110 may be two independent components, or may be integrated into one component. This is not limited in this embodiment of the present invention.

In still another optional implementation of this embodiment of the present invention, referring to FIG. 21, the laser generation module 10 may include a laser 101c and a polarization beam splitter (polarization beam splitter, PBS) 102c.

The laser 101c is connected to an input end of the PBS 102c, and the laser 101c is configured to emit an initial laser beam to the PBS 102c, and adjust a polarization state of the initial laser beam. In other words, a polarization direction of the initial laser beam is continuously adjustable.

An output end of the PBS 102c may be connected to both the first input end and the second input end of the first beam splitter 20, and the PBS 102c is configured to perform polarization beam splitting on the initial laser beam to obtain the first laser beam and the second laser beam whose polarization directions are orthogonal, emit the first laser beam to the first input end of the first beam splitter 20, and emit the second laser beam to the second input end of the first beam splitter 20.

Because the polarization directions of the two laser beams output by the PBS 102c are orthogonal, even if the two laser beams have a same frequency, no interference phenomenon occurs, and impact on the detection result of the detector 30 can be avoided.

The PBS 102c is a component configured to split an incident light beam into two beams of linearly polarized light whose polarization directions are orthogonal. One beam of linearly polarized light may be transmitted from the PBS 102c, and the other beam of linearly polarized light is reflected by the PBS 102c. An included angle between an emergent direction of the reflected beam of linearly polarized light and an emergent direction of the transmitted beam of linearly polarized light may be 90 degrees.

In this implementation, power of the two laser beams emitted by the PBS 102c may be adjusted by adjusting the polarization state of the initial laser beam. In addition, because the polarization state of the initial laser beam is continuously adjustable, the power of the two laser beams emitted by the PBS 102c is also continuously adjustable.

For example, the laser 101c may adjust the polarization state of the initial laser beam in an electronic control manner, for example, adjust the polarization state by using an electronically controlled dynamic polarization controller. Alternatively, a polarizer or a half-wave plate may be disposed at an emergent end of the laser 101c, and the polarization state of the initial laser beam may be adjusted by adjusting an angle at which the initial laser beam is incident to the polarizer or the half-wave plate.

Because a structure of the PBS is relatively simple and costs are relatively low, a structure of the laser generation module can be effectively simplified, and manufacturing costs of the laser generation module can be reduced. In addition, when the deviation of the split ratio of the first beam splitter 20 is relatively small, the power difference between the two laser beams output by the first beam splitter changes slightly with a change of the polarization state of the initial laser beam. Therefore, fine adjustment of the power difference can be implemented.

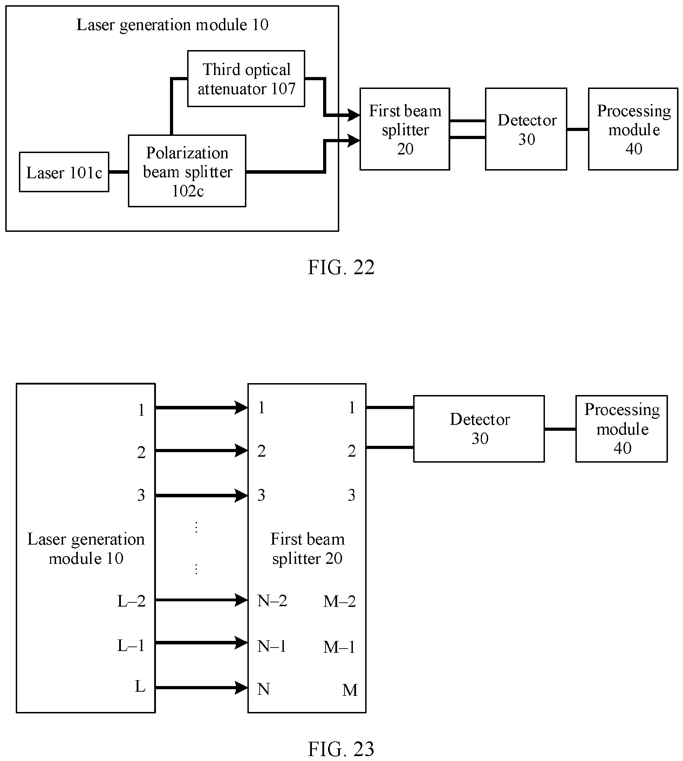

Optionally, referring to FIG. 22, the laser generation module 10 may further include at least one of a third optical attenuator 107 and a fourth optical attenuator 108. For example, the laser generation module 10 shown in FIG. 22 includes the third optical attenuator 107.

The third optical attenuator 107 may be connected to both one output end of the PBS 102c and the first input end of the first beam splitter 20. The third optical attenuator 107 may be configured to receive the first laser beam output by the PBS 102c, adjust the power of the first laser beam, and output the first laser beam whose power is adjusted to the first input end of the first beam splitter 20.

The fourth optical attenuator 108 may be connected to both the other output end of the PBS 102c and the second input end of the first beam splitter 20. The fourth optical attenuator 108 may be configured to receive the second laser beam output by the PBS 102c, adjust the power of the second laser beam, and output the second laser beam whose power is adjusted to the second input end of the first beam splitter 20.

After the optical attenuator is added, a requirement of the laser 101c on performance of adjusting the polarization state of the initial laser beam can be reduced. This further improves flexibility of adjusting the power of the laser beam and precision of power adjustment.

FIG. 23 is a schematic diagram of a structure of another quantum random number generator according to an embodiment of the present invention. Referring to FIG. 23, the laser generation module 10 may include L output ends, and the first beam splitter 20 includes N input ends and M output ends, where L, N, and M are all positive integers greater than 2, and L is less than or equal to N.

Each output end of the laser generation module 10 may be connected to one input end of the first beam splitter 20, and the laser generation module 10 is configured to emit a laser beam to the first beam splitter 20 through each output end. The first laser beam and the second laser beam are laser beams emitted by the laser generation module 10 through two output ends of the L output ends.

The first input end and the second input end of the first beam splitter 20 are two input ends of the N input ends, and the first beam splitter 20 is configured to split N laser beams received through the N input ends into M laser beams.

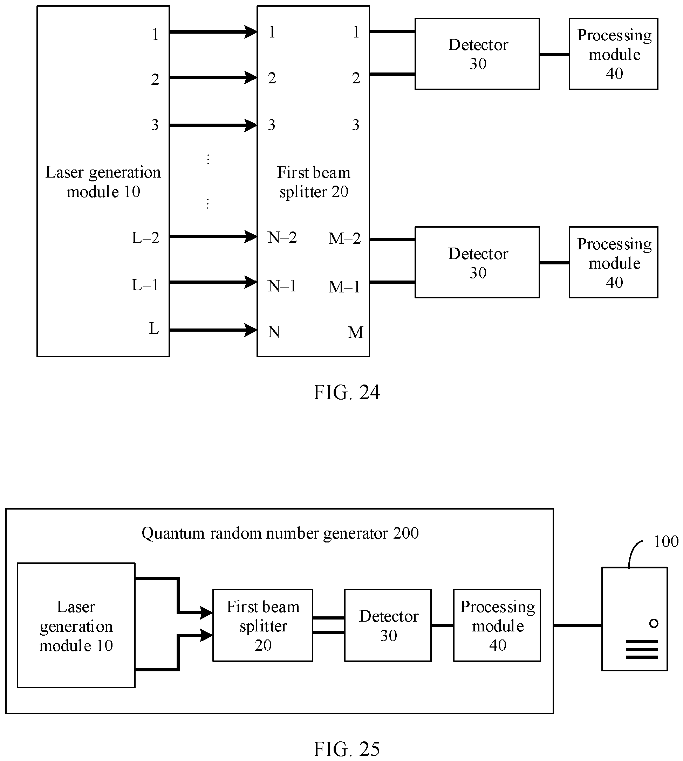

As shown in FIG. 23, two output ends of the M output ends of the first beam splitter 20 may be connected to the detector 30. Alternatively, as shown in FIG. 24, the quantum random number generator may include a plurality of detectors 30 and a plurality of processing modules 40 that are one-to-one connected to the plurality of detectors 30. An input end of each detector 30 may be connected to two output ends of the M output ends of the first beam splitter 20, and the input end of each detector 30 is configured to receive laser beams output by the two output ends, generate one optical signal based on each received laser beam, detect a difference between the two optical signals, and send a detection result to the processing module 40. The plurality of processing modules 40 may work in parallel to generate a random number. This effectively improves random number generation efficiency.

Optionally, in the L output ends of the laser generation module 10, an absolute value of a frequency difference between laser beams output by any two output ends may be beyond the response frequency range of the detector 30. In addition, the laser generation module 10 may adjust power of each laser beam output by the laser generation module 10.

The first beam splitter 20 including the N input ends and the M output ends may be formed by combining a plurality of $2\times2$ beam splitters (in other words, beam splitters including two input ends and two output ends). There is a linear combination relationship between power of a laser beam output by each output end in the first beam splitter 20 and power of a laser beam input by each input end in the first beam splitter 20. For example, assuming that power of a laser beam input by an $i^{th}$ input end in the N input ends is $P_i$, power $P_j^{out}$ of a laser beam output by a $j^{th}$ output end in the M output ends may satisfy the following:

$$P_j^{out} = \sum_{i=1}^{N} C_{ij} P_i$$

.

i is a positive integer not greater than N. j is a positive integer not greater than M, $C_{ij}$ represents a power transmission coefficient between the $j^{th}$ output end and the $i^{th}$ input end, and the power transmission coefficient is preconfigured on the first beam splitter 20, for example, may be configured before the first beam splitter 20 is delivered. In an ideal state, $C_{ij}$ is a fixed value. In other words, any two power transmission coefficients are equal.

The detection result output by each detector 30 is a random number that satisfies Gaussian distribution, an average value of the detection result is directly proportional to a power difference between laser beams output by two output ends connected to the detector 30, and a variance of the detection result is directly proportional to a variance of shot noise. It can be learned from the foregoing analysis that for the quantum random number generator, it needs to be ensured that the average value of the detection result output by the detector is close to 0.

For example, it is assumed that in the M output ends of the first beam splitter 20, an $s^{th}$ output end and a $t^{th}$ output end are connected to the detector 30, and an amplification factor of an amplifier in the detector 30 is *A*. In this case, the average value *Bias* of the detection result output by the detector 30 may be expressed as:

$$Bias = A\left(P_s^{out} - P_t^{out}\right) = A\sum_{i=1}^{N}\left(C_{is} - C_{it}\right)P_i$$

.

*s* and *t* are positive integers not greater than M. Due to a limitation of a component manufacturing process, it is difficult to ensure that any $C_{is} - C_{it}$ is equal to 0 ($|C_{is} - C_{it}|$ is usually approximately equal to a double transmission coefficient error, and the transmission coefficient error is a difference between a transmission coefficient of an actual product and a designed transmission coefficient). Therefore, the output *Bias* is not zero. In this case, if the laser generation module 10 detects that the *Bias* is greater than 0, the laser generation module 10 may determine, from the L input ends of the first beam splitter 20, an $i^{th}$ input end whose power transmission coefficient satisfies $C_{is} - C_{it} < 0$, and increase power of a laser beam emitted to the $i^{th}$ input end, so that the *Bias* may approximate to 0. Alternatively, the laser generation module 10 may determine, from the L input ends, an $i^{th}$ input end whose power transmission coefficient meets $C_{is} - C_{it} > 0$, and decrease power of a laser beam emitted to the $i^{th}$ input end, so that the output *Bias* may approximate to 0.

Similarly, if the laser generation module 10 detects that the *Bias* is less than 0, the laser generation module 10 may determine, from the L input ends, the $i^{th}$ input end whose power transmission coefficient meets $C_{is} - C_{it} > 0$, and increase power of the laser beam emitted to the $i^{th}$ input end, so that the output *Bias* may approximate to 0. Alternatively, the laser generation module 10 may determine, from the L input ends, the $i^{th}$ input end whose power transmission coefficient meets $C_{is} - C_{it} < 0$, and decrease the power of the laser beam emitted to the $i^{th}$ input end, so that the output *Bias* may approximate to 0.

It should be noted that, because the laser generation module 10 may not accurately learn of a power transmission coefficient between each output end and each input end of the first beam splitter 20, when adjusting a power of a laser beam, the laser generation module 10 may first adjust power of a laser beam emitted to a target input end in an adjustment direction of power increase or decrease, and then continue to adjust the power of the laser beam emitted to the target input end based on a value, of the *Bias,* subsequently fed back by the processing module 40, until the *Bias* approximates to 0. For example, if an absolute value, of the *Bias,* subsequently fed back by the processing module 40 is smaller than an absolute value, of the *Bias,* previously fed back, the power of the laser beam emitted to the target input end may continue to be adjusted in a same adjustment direction. Otherwise, the power of the laser beam emitted to the target input end may be adjusted in an opposite adjustment direction. The target input end may be one or more input ends randomly selected from the L input ends, or may be one or more preset input ends.

Alternatively, in a process of adjusting the power of the laser beam emitted to the target input end, if the absolute value that is of the *Bias* and that is fed back by the processing module 40 does not change or changes excessively slightly, but the *Bias* does not approximate to 0, a new target input end may be re-determined, and power of a laser beam emitted to the new target input end is continuously adjusted in the foregoing manner, until the *Bias* approximates to 0.

It should be further noted that in this embodiment of the present invention, in the quantum random number generator, the components in the laser generation module 10, the laser generation module 10 and the first beam splitter 20, and the first beam splitter 20 and the detector 30 may all be connected through an optical fiber.

In conclusion, the embodiments of the present invention provide the quantum random number generator, including the laser generation module, the first beam splitter, the detector, and the processing module. The laser generation module emits two laser beams to the first beam splitter, and power of at least one of the two laser beams is adjustable. Therefore, when the split ratio of the first beam splitter is deviated or detection efficiency of the detector for the two laser beams is deviated, the power of the at least one laser beam may be adjusted, so that the average value of the detection result output by the detector is close to 0. In this way, the processing module can directly generate the random number based on the detection result without processing a direct current bias in the detection result. This effectively improves efficiency of the quantum random number generator in generating the random number.

In addition, because the two laser beams output by the laser generation module satisfy at least one of the following conditions: the absolute value of the frequency difference is beyond the response frequency range of the detector and the polarization directions are orthogonal, interference between the two laser beams can be avoided, or even if interference occurs, an interference signal cannot be detected by the detector. This can avoid an impact of the interference signal on the detection result.

An embodiment of the present invention further provides a key generation system. Referring to FIG. 25, the key generation system may include a key generation apparatus 100 and a quantum random number generator 200. The quantum random number generator 200 may be the quantum random number generator provided in the foregoing embodiment.

The quantum random number generator 200 is connected to the key generation apparatus 100, and the quantum random number generator 200 is configured to send a random number to the key generation apparatus 100.

The key generation apparatus 100 may be configured to generate a key based on the random number. Optionally, the key generation apparatus 100 may be a server, or may be a server cluster including several servers, or may be a cloud computing service center.

It should be noted that, in the embodiments of this application, "at least one" means one or more, and "a plurality of' means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be in a singular or plural form.

The foregoing descriptions are merely optional embodiments of this application, but are not intended to limit this application. Any modification, equivalent replacement, or improvement made without departing from the scope of the invention as defined by the independent claims shall fall within the protection scope of this application.

## Claims

1. A quantum random number generator, comprising a laser generation module, a first beam splitter, a detector, and a processing module, wherein

the laser generation module is configured to emit a first laser beam to a first input end of the first beam splitter, emit a second laser beam to a second input end of the first beam splitter, and adjust power of one or more laser beams of the first laser beam and the second laser beam, wherein the first laser beam and the second laser beam satisfy one or more of the following conditions: an absolute value of a frequency difference is beyond a response frequency range of the detector and polarization directions are orthogonal;
the first beam splitter is configured to couple the received first laser beam and the received second laser beam to obtain two laser beams, and output the two laser beams to the detector;
the detector is configured to generate one electronic signal based on each received laser beam, detect a difference between two electronic signals, and output a detection result to the processing module; and
the processing module is configured to generate a random number based on the detection result.

2. The quantum random number generator according to claim 1, wherein

the processing module is further configured to periodically sample the detection result, average sampling points in a period, and send an average value of the detection result to the laser generation module; and
the laser generation module is further configured to adjust the power of the one or more laser beams of the first laser beam and the second laser beam based on the average value of the detection result, until an absolute value of the average value of the detection result is less than a difference threshold.

3. The quantum random number generator according to claim 1, wherein the quantum random number generator further comprises a low-pass filter, wherein

the detector is further configured to send the detection result to the low-pass filter;
the low-pass filter is configured to perform low-pass filtering on the detection result to obtain an average value of the detection result, and send the average value of the detection result to the laser generation module; and
the laser generation module is further configured to adjust the power of the one or more laser beams of the first laser beam and the second laser beam based on the average value of the detection result, until an absolute value of the average value of the detection result is less than a difference threshold.

4. The quantum random number generator according to claim 2 or 3, wherein the laser generation module is configured to:

when the absolute value of the average value of the detection result is greater than the difference threshold, adjust power of one laser beam of the first laser beam and the second laser beam in an adjustment direction of power increase or decrease; and
when it is detected that an absolute value of an average value that is of the detection result and that is received after the power adjustment is less than the absolute value of the average value that is of the detection result and that is received before the power adjustment, continue to adjust the power of the one laser beam in a same adjustment direction; or
when it is detected that an absolute value of an average value that is of the detection result and that is received after the power adjustment is greater than the absolute value of the average value that is of the detection result and that is received before the power adjustment, continue to adjust the power of the one laser beam in an opposite adjustment direction, or adjust power of the other laser beam in a same adjustment direction.

5. The quantum random number generator according to any one of claims 1 to 4, wherein the laser generation module comprises a first laser, a second laser, and a power adjustment submodule, wherein

the first laser is connected to the first input end of the first beam splitter, and the first laser is configured to emit the first laser beam;
the second laser is connected to the second input end of the first beam splitter, and the second laser is configured to emit the second laser beam; and
the power adjustment submodule is connected to one or more lasers of the first laser and the second laser, and is configured to adjust power of a laser beam emitted by the laser connected to the power adjustment submodule.

6. The quantum random number generator according to claim 5, wherein the power adjustment submodule comprises one or more of a first current control submodule and a second current control submodule, wherein

the first current control submodule is connected to the first laser, and the first current control submodule is configured to adjust a drive current of the first laser; and
the second current control submodule is connected to the second laser, and the second current control submodule is configured to adjust a drive current of the second laser.

7. The quantum random number generator according to claim 5 or 6, wherein the power adjustment submodule comprises one or more of a first optical attenuator and a second optical attenuator, wherein

the first optical attenuator is connected to both the first laser and the first input end of the first beam splitter, and the first optical attenuator is configured to adjust power of the first laser beam emitted by the first laser; and
the second optical attenuator is connected to both the second laser and the second input end of the first beam splitter, and the second optical attenuator is configured to adjust power of the second laser beam emitted by the second laser.

8. The quantum random number generator according to any one of claims 1 to 4, wherein the first laser beam and the second laser beam satisfy that the absolute value of the frequency difference is beyond the response frequency range of the detector, and the laser generation module comprises a laser and a frequency modulator, wherein

the laser is configured to emit an initial laser beam to the frequency modulator;
the frequency modulator is configured to modulate the initial laser beam to generate the first laser beam and the second laser beam, emit the first laser beam to the first input end, and emit the second laser beam to the second input end; and
the frequency modulator is further configured to adjust the power of the one or more laser beams of the first laser beam and the second laser beam.

9. The quantum random number generator according to claim 8, wherein the frequency modulator comprises a signal source and an acousto-optic modulator, wherein

the signal source is configured to provide a modulation signal for the acousto-optic modulator;
the acousto-optic modulator is configured to modulate, under the drive of the modulation signal, the initial laser beam to generate the first laser beam and the second laser beam, emit the first laser beam to the first input end, and emit the second laser beam to the second input end; and
the acousto-optic modulator is further configured to adjust power of the first laser beam and power of the second laser beam based on power of the modulation signal.

10. The quantum random number generator according to claim 8, wherein the frequency modulator comprises a signal source, an electro-optic modulator, and an arrayed waveguide grating, wherein

the signal source is configured to provide a modulation signal for the electro-optic modulator;
an output end of the electro-optic modulator is connected to the arrayed waveguide grating, and the electro-optic modulator is configured to modulate the initial laser beam based on the modulation signal to generate a third laser beam that comprises a carrier and one or more sidebands, and adjust power of the carrier in the third laser beam and power of the sideband in the third laser beam based on power of the modulation signal; and
the arrayed waveguide grating is configured to separate the first laser beam and the second laser beam from the third laser beam, emit the first laser beam to the first input end, and emit the second laser beam to the second input end.

11. The quantum random number generator according to claim 8, wherein the frequency modulator comprises a second beam splitter, a signal source, an electro-optic modulator, and a filter, wherein

the second beam splitter is configured to split the initial laser beam to generate the first laser beam and a fourth laser beam, emit the first laser beam to the first input end of the first beam splitter, and emit the fourth laser beam to the electro-optic modulator;
the signal source is configured to provide a modulation signal for the electro-optic modulator;
an output end of the electro-optic modulator is connected to an input end of the filter, and the electro-optic modulator is configured to modulate the fourth laser beam based on the modulation signal to generate a fifth laser beam that comprises a carrier and one or more sidebands, and adjust power of the carrier in the fifth laser beam and power of the sideband in the fifth laser beam based on power of the modulation signal; and
the filter is configured to filter the fifth laser beam to obtain the second laser beam, and emit the second laser beam to the second input end.

12. The quantum random number generator according to any one of claims 9 to 11, wherein
a frequency of the modulation signal provided by the signal source is greater than an upper limit of the response frequency range.

13. The quantum random number generator according to any one of claims 1 to 12, wherein the first laser beam and the second laser beam satisfy that the polarization directions are orthogonal, and the laser generation module further comprises one or more of a first polarization controller and a second polarization controller, wherein

the first polarization controller is configured to receive the first laser beam, adjust a polarization direction of the first laser beam, and output the first laser beam whose polarization direction is adjusted to the first input end; and
the second polarization controller is configured to receive the second laser beam, adjust a polarization direction of the second laser beam, and output the second laser beam whose polarization direction is adjusted to the second input end.

14. The quantum random number generator according to any one of claims 1 to 4, wherein the first laser beam and the second laser beam satisfy that the polarization directions are orthogonal, and the laser generation module comprises a laser and a polarization beam splitter, wherein

the laser is configured to emit an initial laser beam to the polarization beam splitter; and
the polarization beam splitter is configured to perform polarization beam splitting on the initial laser beam to obtain the first laser beam and the second laser beam whose polarization directions are orthogonal, emit the first laser beam to the first input end, and emit the second laser beam to the second input end.

15. The quantum random number generator according to any one of claims 8 to 12 or claim 14, wherein the laser generation module further comprises one or more of a third optical attenuator and a fourth optical attenuator, wherein

the third optical attenuator is configured to receive the first laser beam, adjust the power of the first laser beam, and output the first laser beam whose power is adjusted to the first input end; and
the fourth optical attenuator is configured to receive the second laser beam, adjust the power of the second laser beam, and output the second laser beam whose power is adjusted to the second input end.

16. The quantum random number generator according to any one of claims 1 to 15, wherein

the laser generation module comprises L output ends, and the first beam splitter comprises N input ends and M output ends, wherein L, N, and M are all positive integers greater than 2, and L is less than or equal to N;
each output end of the laser generation module is connected to one input end of the first beam splitter, and the laser generation module is configured to emit a laser beam to the first beam splitter through each output end, wherein the first laser beam and the second laser beam are laser beams emitted by the laser generation module through two output ends of the L output ends;
the first input end and the second input end of the first beam splitter are two input ends of the N input ends, and the first beam splitter is configured to split N laser beams received through the N input ends into M laser beams; and
two output ends of the M output ends of the first beam splitter are connected to the detector, or the quantum random number generator comprises a plurality of detectors and a plurality of processing modules that are one-to-one connected to the plurality of detectors, and an input end of each detector is connected to two output ends of the M output ends.

17. A key generation system, wherein the key generation system comprises a key generation apparatus and the quantum random number generator according to any one of claims 1 to 16, wherein

the quantum random number generator is connected to the key generation apparatus, and the quantum random number generator is configured to send a random number to the key generation apparatus; and
the key generation apparatus is configured to generate a key based on the random number.

**Patentansprüche**

1. Quantenzufallszahlengenerator, umfassend ein Lasererzeugungsmodul, einen ersten Strahlteiler, einen Detektor und ein Verarbeitungsmodul, wobei

das Lasererzeugungsmodul konfiguriert ist, um einen ersten Laserstrahl an ein erstes Eingabeende des ersten Strahlteilers zu emittieren, einen zweiten Laserstrahl an ein zweites Eingabeende des ersten Strahlteilers zu emittieren und eine Leistung eines oder mehrerer Laserstrahlen des ersten Laserstrahls und des zweiten Laserstrahls anzupassen, wobei der erste Laserstrahl und der zweite Laserstrahl eine oder mehrere der folgenden Bedingungen erfüllen: ein Absolutwert einer Frequenzdifferenz außerhalb eines Antwortfrequenzbereichs des Detektors liegt und Polarisationsrichtungen orthogonal sind;
der erste Strahlteiler konfiguriert ist, um den empfangenen ersten Laserstrahl und den empfangenen zweiten Laserstrahl zu koppeln, um zwei Laserstrahlen zu erhalten, und die zwei Laserstrahlen an den Detektor auszugeben;
der Detektor konfiguriert ist, um ein elektronisches Signal basierend auf jedem empfangenen Laserstrahl zu erzeugen, um eine Differenz zwischen zwei elektronischen Signalen zu detektieren und ein Detektionsergebnis an das Verarbeitungsmodul auszugeben; und
das Verarbeitungsmodul konfiguriert ist, um eine Zufallszahl basierend auf dem Detektionsergebnis zu erzeugen.

2. Quantenzufallszahlengenerator nach Anspruch 1, wobei

das Verarbeitungsmodul ferner konfiguriert ist, um das Detektionsergebnis periodisch abzutasten, Abtastpunkte in einer Periode zu mitteln und einen Durchschnittswert des Detektionsergebnisses an das Lasererzeugungsmodul zu senden; und
das Lasererzeugungsmodul ferner konfiguriert ist, um die Leistung des einen oder der mehreren Laserstrahlen des ersten Laserstrahls und des zweiten Laserstrahls basierend auf dem Mittelwert des Detektionsergebnisses anzupassen, bis ein Absolutwert des Mittelwerts des Detektionsergebnisses kleiner als ein Differenzschwellenwert ist.

3. Quantenzufallszahlengenerator nach Anspruch 1, wobei der Quantenzufallszahlengenerator ferner einen Tiefpass umfasst, wobei

der Detektor ferner konfiguriert ist, um das Detektionsergebnis an den Tiefpass zu senden;
der Tiefpass konfiguriert ist, um eine Tiefpassfilterung auf dem Detektionsergebnis durchzuführen, um einen Durchschnittswert des Detektionsergebnisses zu erhalten, und den Mittelwert des Detektionsergebnisses an das Lasererzeugungsmodul zu senden; und
das Lasererzeugungsmodul ferner konfiguriert ist, um die Leistung des einen oder der mehreren Laserstrahlen des ersten Laserstrahls und des zweiten Laserstrahls basierend auf dem Mittelwert des Detektionsergebnisses anzupassen, bis ein Absolutwert des Mittelwerts des Detektionsergebnisses kleiner als ein Differenzschwellenwert ist.

4. Quantenzufallszahlengenerator nach Anspruch 2 oder 3, wobei das Lasererzeugungsmodul konfiguriert ist zum:

wenn der Absolutwert des Durchschnittswerts des Detektionsergebnisses über dem Differenzschwellenwert liegt, Anpassen der Leistung eines Laserstrahls des ersten Laserstrahls und des zweiten Laserstrahls in einer Anpassungsrichtung einer Leistungssteigerung oder -verminderung; und
wenn detektiert wird, dass ein Absolutwert eines Durchschnittswerts, der aus dem Detektionsergebnis stammt und der nach der Leistungsanpassung empfangen wird, kleiner als der Absolutwert des Durchschnittswerts ist, der aus dem Detektionsergebnis stammt und der vor der Leistungsanpassung empfangen wird, weiterhin die Leistung des einen Laserstrahls in einer gleichen Anpassungsrichtung anzupassen; oder
wenn detektiert wird, dass ein Absolutwert eines Durchschnittswerts, der aus dem Detektionsergebnis stammt und der nach der Leistungsanpassung empfangen wird, über dem Absolutwert des Durchschnittswerts liegt, der aus dem Detektionsergebnis stammt und der vor der Leistungsanpassung empfangen wird, weiterhin die Leistung des einen Laserstrahls in einer entgegengesetzten Anpassungsrichtung anzupassen, oder die Leistung des anderen Laserstrahls in einer gleichen Anpassungsrichtung anzupassen.

5. Quantenzufallszahlengenerator nach einem der Ansprüche 1 bis 4, wobei das Lasererzeugungsmodul einen ersten Laser, einen zweiten Laser und ein Leistungsanpassungssubmodul umfasst, wobei

der erste Laser mit dem ersten Eingabeende des ersten Strahlteilers verbunden ist und der erste Laser konfiguriert ist, um den ersten Laserstrahl zu emittieren;
der zweite Laser mit dem zweiten Eingabeende des ersten Strahlteilers verbunden ist und der zweite Laser konfiguriert ist, um den zweiten Laserstrahl zu emittieren; und
das Leistungsanpassungssubmodul mit einem oder mehreren Lasern des ersten Lasers und des zweiten Lasers verbunden ist, und konfiguriert ist, um die Leistung eines Laserstrahls anzupassen, der durch den Laser emittiert wird, der mit dem Leistungsanpassungssubmodul verbunden ist.

6. Quantenzufallszahlengenerator nach Anspruch 5, wobei das Leistungsanpassungssubmodul ein oder mehrere eines ersten Stromsteuerungssubmoduls und eines zweiten Stromsteuerungssubmoduls umfasst, wobei

das erste Stromsteuerungssubmodul mit dem ersten Laser verbunden ist und das erste Stromsteuerungssubmodul konfiguriert ist, um einen Treiberstrom des ersten Lasers anzupassen; und
das zweite Stromsteuerungssubmodul mit dem zweiten Laser verbunden ist und das zweite Stromsteuerungssubmodul konfiguriert ist, um einen Treiberstrom des zweiten Lasers anzupassen.

7. Quantenzufallszahlengenerator nach Anspruch 5 oder 6, wobei das Leistungsanpassungssubmodul ein oder mehrere eines ersten optischen Dämpfungsglieds und eines zweiten optischen Dämpfungsglieds umfasst, wobei

das erste optische Dämpfungsglied sowohl mit dem ersten Laser als auch dem ersten Eingabeende des ersten Strahlteilers verbunden ist und das erste optische Dämpfungsglied konfiguriert ist, um die Leistung des ersten Laserstrahls anzupassen, der durch den ersten Laser emittiert wird; und
das zweite optische Dämpfungsglied sowohl mit dem zweiten Laser als auch dem zweiten Eingabeende des ersten Strahlteilers verbunden ist, und das zweite optische Dämpfungsglied konfiguriert ist, um die Leistung des zweiten Laserstrahls anzupassen, der durch den zweiten Laser emittiert wird.

8. Quantenzufallszahlengenerator nach einem der Ansprüche 1 bis 4, wobei der erste Laserstrahl und der zweite Laserstrahl erfüllen, dass der Absolutwert der Frequenzdifferenz außerhalb des Antwortfrequenzbereichs des Detektors liegt, und das Lasererzeugungsmodul einen Laser und einen Frequenzmodulator umfasst, wobei

der Laser konfiguriert ist, um einen anfänglichen Laserstrahl an den Frequenzmodulator zu emittieren;
der Frequenzmodulator konfiguriert ist, um den anfänglichen Laserstrahl zu modulieren, um den ersten Laserstrahl und den zweiten Laserstrahl zu erzeugen, den ersten Laserstrahl an das erste Eingabeende zu emittieren und den zweiten Laserstrahl an das zweite Eingabeende zu emittieren; und
der Frequenzmodulator ferner konfiguriert ist, um die Leistung des einen oder der mehreren Laserstrahlen des ersten Laserstrahls und des zweiten Laserstrahls anzupassen.

9. Quantenzufallszahlengenerator nach Anspruch 8, wobei der Frequenzmodulator eine Signalquelle und einen akustooptischen Modulator umfasst, wobei

die Signalquelle konfiguriert ist, um ein Modulationssignal für den akustooptischen Modulator bereitzustellen;
der akustooptische Modulator konfiguriert ist, um unter dem Antrieb des Modulationssignals den anfänglichen Laserstrahl zu modulieren, um den ersten Laserstrahl und den zweiten Laserstrahl zu erzeugen, den ersten Laserstrahl an das erste Eingabeende zu emittieren und den zweiten Laserstrahl an das zweite Eingabeende zu emittieren; und
der akustooptische Modulator ferner konfiguriert ist, um die Leistung des ersten Laserstrahls und die Leistung des zweiten Laserstrahls basierend auf der Leistung des Modulationssignals anzupassen.

10. Quantenzufallszahlengenerator nach Anspruch 8, wobei der Frequenzmodulator eine Signalquelle, einen elektrooptischen Modulator und ein angeordnetes Wellenleitergitter umfasst, wobei

die Signalquelle konfiguriert ist, um ein Modulationssignal für den elektrooptischen Modulator bereitzustellen;

ein Ausgabeende des elektrooptischen Modulators mit dem angeordneten Wellenleitergitter verbunden ist, und der elektrooptische Modulator konfiguriert ist, um den anfänglichen Laserstrahl basierend auf dem Modulationssignal zu modulieren, um einen dritten Laserstrahl zu erzeugen, der einen Träger und einen oder mehrere Seitenbänder umfasst, und die Leistung des Trägers in dem dritten Laserstrahl und die Leistung des Seitenbandss in dem dritten Laserstrahl basierend auf der Leistung des Modulationssignals anzupassen; und

das angeordnete Wellenleitergitter konfiguriert ist, um den ersten Laserstrahl und den zweiten Laserstrahl von dem dritten Laserstrahl zu trennen, den ersten Laserstrahl an das erste Eingangsende zu emittieren und den zweiten Laserstrahl an das zweite Eingabeende zu emittieren.

11. Quantenzufallszahlengenerator nach Anspruch 8, wobei der Frequenzmodulator einen zweiten Strahlteiler, eine Signalquelle, einen elektrooptischen Modulator und ein Filter umfasst, wobei

der zweite Strahlteiler konfiguriert ist, um den anfänglichen Laserstrahl zu teilen, um den ersten Laserstrahl und einen vierten Laserstrahl zu erzeugen, den ersten Laserstrahl an das erste Eingabeende des ersten Strahlteilers zu emittieren und den vierten Laserstrahl an den elektrooptischen Modulator zu emittieren;

die Signalquelle konfiguriert ist, um ein Modulationssignal für den elektrooptischen Modulator bereitzustellen;

ein Ausgabeende des elektrooptischen Modulators mit einem Eingabeende des Filters verbunden ist, und der elektrooptische Modulator konfiguriert ist, um den vierten Laserstrahl basierend auf dem Modulationssignal zu modulieren, um einen fünften Laserstrahl zu erzeugen, der einen Träger und einen oder mehrere Seitenbänder umfasst, und die Leistung des Trägers in dem fünften Laserstrahl und die Leistung des Seitenbands in dem fünften Laserstrahl basierend auf der Leistung des Modulationssignals anzupassen; und

das Filter konfiguriert ist, um den fünften Laserstrahl zu filtern, um den zweiten Laserstrahl zu erhalten, und den zweiten Laserstrahl an das zweite Eingabeende zu emittieren.

12. Quantenzufallszahlengenerator nach einem der Ansprüche 9 bis 11, wobei
eine Frequenz des Modulationssignals, das durch die Signalquelle bereitgestellt wird, über einer Obergrenze des Antwortfrequenzbereichs liegt.

13. Quantenzufallszahlengenerator nach einem der Ansprüche 1 bis 12, wobei der erste Laserstrahl und der zweite Laserstrahl erfüllen, dass die Polarisationsrichtungen orthogonal sind, und das Lasererzeugungsmodul ferner einen oder mehrere einer ersten Polarisationssteuervorrichtung und einer zweiten Polarisationssteuervorrichtung umfasst, wobei

die erste Polarisationssteuervorrichtung konfiguriert ist, um den ersten Laserstrahl zu empfangen, eine Polarisationsrichtung des ersten Laserstrahls anzupassen und den ersten Laserstrahl auszugeben, dessen Polarisationsrichtung an das erste Eingabeende angepasst ist; und

die zweite Polarisationssteuervorrichtung konfiguriert ist, um den zweiten Laserstrahl zu empfangen, eine Polarisationsrichtung des zweiten Laserstrahls anzupassen und den zweiten Laserstrahl auszugeben, dessen Polarisationsrichtung an das zweite Eingabeende angepasst ist.

14. Quantenzufallszahlengenerator nach einem der Ansprüche 1 bis 4, wobei der erste Laserstrahl und der zweite Laserstrahl erfüllen, dass die Polarisationsrichtungen orthogonal sind, und das Lasererzeugungsmodul einen Laser und einen Polarisationsstrahlteiler umfasst, wobei

der Laser konfiguriert ist, um einen anfänglichen Laserstrahl an den Polarisationsstrahlteiler zu emittieren; und

der Polarisationsstrahlteiler konfiguriert ist, um eine Polarisationsstrahlteilung an dem anfänglichen Laserstrahl durchzuführen, um den ersten Laserstrahl und den zweiten Laserstrahl zu erhalten, deren Polarisationsrichtungen orthogonal sind, den ersten Laserstrahl an das erste Eingabeende zu emittieren und den zweiten Laserstrahl an das zweite Eingabeende zu emittieren.

15. Quantenzufallszahlengenerator nach einem der Ansprüche 8 bis 12 oder Anspruch 14, wobei das Lasererzeugungsmodul ferner einen oder mehrere eines dritten optischen Dämpfungsglieds und eines vierten optischen Dämpfungsglieds umfasst, wobei

das dritte optische Dämpfungsglied konfiguriert ist, um den ersten Laserstrahl zu empfangen, die Leistung des ersten Laserstrahls anzupassen und den ersten Laserstrahl auszugeben, dessen Leistung an das erste Eingabeende angepasst wird; und

das vierte optische Dämpfungsglied konfiguriert ist, um den zweiten Laserstrahl zu empfangen, die Leistung des zweiten Laserstrahls anzupassen und den zweiten Laserstrahl auszugeben, dessen Leistung an das zweite Eingabeende angepasst ist.

16. Quantenzufallszahlengenerator nach einem der Ansprüche 1 bis 15, wobei

das Lasererzeugungsmodul L Ausgabeenden umfasst und der erste Strahlteiler N Eingabeenden und M Ausgabeenden umfasst, wobei L, N und M alle positive ganzen Zahlen über 2 sind und L kleiner oder gleich N ist;

jedes Ausgabeende des Lasererzeugungsmoduls mit einem Eingabeende des ersten Strahlteilers verbunden ist, und das Lasererzeugungsmodul konfiguriert ist, um einen Laserstrahl über jedes Ausgabeende an den ersten Strahlteiler zu emittieren, wobei der erste Laserstrahl und der zweite Laserstrahl Laserstrahlen sind, die durch das Lasererzeugungsmodul über zwei Ausgabeenden der L Ausgabeenden emittiert werden;

das erste Eingabeende und das zweite Eingabeende des ersten Strahlteilers zwei Eingabeendeen der N Eingangsenden sind, und der erste Strahlteiler konfiguriert ist, um N Laserstrahlen, die über die N Eingangsenden empfangen werden, in M Laserstrahlen zu teilen; und

zwei Ausgabeenden der M Ausgabeenden des ersten Strahlteilers mit dem Detektor verbunden sind, oder der Quantenzufallszahlengenerator eine Vielzahl von Detektoren und eine Vielzahl von Verarbeitungsmodulen umfasst, die eins zu eins mit der Vielzahl von Detektoren verbunden sind, und ein Eingabeende jedes Detektors mit zwei Ausgabeenden der M Ausgabeenden verbunden ist.

17. Schlüsselerzeugungssystem, wobei das Schlüsselerzeugungssystem eine Schlüsselerzeugungseinrichtung und den Quantenzufallszahlengenerator nach einem der Ansprüche 1 bis 16 umfasst, wobei

der Quantenzufallszahlengenerator mit der Schlüsselerzeugungseinrichtung verbunden ist und der Quantenzufallszahlengenerator konfiguriert ist, um eine Zufallszahl an die Schlüsselerzeugungseinrichtung zu senden; und

die Schlüsselerzeugungseinrichtung konfiguriert ist, um einen Schlüssel basierend auf der Zufallszahl zu erzeugen.

**Revendications**

1. Générateur de nombres aléatoires quantiques, comprenant un module de génération laser, un premier séparateur de faisceau, un détecteur et un module de traitement, dans lequel

le module de génération laser est configuré pour émettre un premier faisceau laser vers une première extrémité d'entrée du premier séparateur de faisceau, émettre un deuxième faisceau laser vers une seconde extrémité d'entrée du premier séparateur de faisceau et régler la puissance d'un ou plusieurs faisceaux laser du premier faisceau laser et du deuxième faisceau laser, le premier faisceau laser et le deuxième faisceau laser satisfaisant aux conditions suivantes : une valeur absolue d'une différence de fréquence étant au-delà d'une plage de fréquences de réponse du détecteur et/ou les directions de polarisation étant orthogonales ;

le premier séparateur de faisceau est configuré pour coupler le premier faisceau laser reçu et le deuxième faisceau laser reçu afin d'obtenir deux faisceaux laser et d'émettre les deux faisceaux laser vers le détecteur ;

le détecteur est configuré pour générer un signal électronique sur la base de chaque faisceau laser reçu, détecter une différence entre deux signaux électroniques et délivrer un résultat de détection au module de traitement ; et

le module de traitement est configuré pour générer un nombre aléatoire sur la base du résultat de détection.

2. Générateur de nombres aléatoires quantiques selon la revendication 1, dans lequel

le module de traitement est en outre configuré pour échantillonner périodiquement le résultat de détection, la moyenne des points d'échantillonnage dans une période, et envoyer une valeur moyenne du résultat de détection au module de génération laser ; et

le module de génération laser est en outre configuré pour régler la puissance du ou des faisceaux laser du premier faisceau laser et du deuxième faisceau laser sur la base de la valeur moyenne du résultat de détection, jusqu'à ce qu'une valeur absolue de la valeur moyenne du résultat de détection est inférieur à un seuil de différence.

3. Générateur de nombres aléatoires quantiques selon la revendication 1, dans lequel le générateur de nombres aléatoires quantiques comprend en outre un filtre passe-bas, dans lequel

le détecteur est en outre configuré pour envoyer le résultat de détection au filtre passe-bas ;

le filtre passe-bas est configuré pour effectuer un filtrage passe-bas sur le résultat de détection afin d'obtenir une valeur moyenne du résultat de détection et envoyer la valeur moyenne du résultat de détection au module de génération laser ; et

le module de génération laser est en outre configuré pour régler la puissance du ou des faisceaux laser du premier faisceau laser et du deuxième faisceau laser sur la base de la valeur moyenne du résultat de détection, jusqu'à ce qu'une valeur absolue de la valeur moyenne du résultat de détection est inférieur à un seuil de différence.

4. Générateur de nombres aléatoires quantiques selon la revendication 2 ou 3, dans lequel le module de génération laser est configuré pour :

lorsque la valeur absolue de la valeur moyenne du résultat de détection est supérieure au seuil de différence, régler la puissance d'un faisceau laser du premier faisceau laser et du deuxième faisceau laser dans une direction de réglage d'augmentation ou de diminution de puissance ; et

lorsqu'il est détecté qu'une valeur absolue d'une valeur moyenne qui est du résultat de la détection et qui est reçue après le réglage de puissance est inférieure à la valeur absolue de la valeur moyenne qui est du résultat de détection et qui est reçue avant le réglage de puissance, continuer à régler la puissance du faisceau laser dans une même direction de réglage ; ou

lorsqu'il est détecté qu'une valeur absolue d'une valeur moyenne qui est du résultat de la détection et qui est reçue après le réglage de puissance est supérieure à la valeur absolue de la valeur moyenne qui est du résultat de détection et qui est reçue avant le réglage de puissance, continuer à régler la puissance d'un faisceau laser dans une direction de réglage opposée ou régler la puissance de l'autre faisceau laser dans une même direction de réglage.

5. Générateur de nombres aléatoires quantiques selon l'une quelconque des revendications 1 à 4, dans lequel le module de génération laser comprend un premier laser, un second laser et un sous-module de réglage de puissance, dans lequel

le premier laser est connecté à la première extrémité d'entrée du premier séparateur de faisceau et le premier laser est configuré pour émettre le premier faisceau laser ;

le second laser est connecté à la seconde extrémité d'entrée du premier séparateur de faisceau et le second laser est configuré pour émettre le deuxième faisceau laser ; et

le sous-module de réglage de puissance est connecté à un ou plusieurs lasers du premier laser et du second laser et est configuré pour régler la puissance d'un faisceau laser émis par le laser connecté au sous-module de réglage de puissance.

6. Générateur de nombres aléatoires quantiques selon la revendication 5, dans lequel le sous-module de réglage de puissance comprend un premier sous-module de commande de courant et/ou un second sous-module de commande de courant, dans lequel

le premier sous-module de commande de courant est connecté au premier laser et le premier sous-module de commande de courant est configuré pour régler un courant d'attaque du premier laser ; et

le second sous-module de commande de courant est connecté au second laser et le second sous-module de commande de courant est configuré pour régler un courant d'attaque du second laser.

7. Générateur de nombres aléatoires quantiques selon la revendication 5 ou 6, dans lequel le sous-module de réglage de puissance comprend un premier atténuateur optique et/ou un deuxième atténuateur optique, dans lequel

le premier atténuateur optique est connecté à la fois au premier laser et à la première extrémité d'entrée du premier séparateur de faisceau et le premier atténuateur optique est configuré pour régler la puissance du premier faisceau laser émis par le premier laser ; et

le deuxième atténuateur optique est connecté à la fois au second laser et à la seconde extrémité d'entrée du premier séparateur de faisceau et le deuxième atténuateur optique est configuré pour régler la puissance du deuxième faisceau laser émis par le second laser.

8. Générateur de nombres aléatoires quantiques selon l'une quelconque des revendications 1 à 4, dans lequel le premier faisceau laser et le deuxième faisceau laser satisfont que la valeur absolue de la différence de fréquence est au-delà de la plage de fréquences de réponse du détecteur et le module de génération laser comprend un laser et un modulateur de fréquence, dans lequel

le laser est configuré pour émettre un faisceau laser initial vers le modulateur de fréquence ;

le modulateur de fréquence est configuré pour moduler le faisceau laser initial pour générer le premier faisceau laser et le deuxième faisceau laser, émettre le premier faisceau laser vers la première extrémité d'entrée et émettre le deuxième faisceau laser vers la seconde extrémité d'entrée ; et

le modulateur de fréquence est en outre configuré pour régler la puissance du ou des faisceaux laser du premier faisceau laser et du deuxième faisceau laser.

9. Générateur de nombres aléatoires quantiques selon la revendication 8, dans lequel le modulateur de fréquence comprend une source de signal et un modulateur acousto-optique, dans lequel

la source de signal est configurée pour fournir un signal de modulation au modulateur acousto-optique ;

le modulateur acousto-optique est configuré pour moduler, sous la commande du signal de modulation, le faisceau laser initial afin de générer le premier faisceau laser et le deuxième faisceau laser, émettre le premier faisceau laser vers la première extrémité d'entrée et émettre le second laser faisceau vers la seconde extrémité d'entrée ; et

le modulateur acousto-optique est en outre configuré pour régler la puissance du premier faisceau laser et la puissance du deuxième faisceau laser sur la base de la puissance du signal de modulation.

10. Générateur de nombres aléatoires quantiques selon la revendication 8, dans lequel le modulateur de fréquence comprend une source de signal, un modulateur électro-optique et un réseau sélectif planaire, dans lequel

la source de signal est configurée pour fournir un signal de modulation pour le modulateur électro-optique ;

une extrémité de sortie du modulateur électro-optique est connectée au réseau sélectif planaire et le modulateur électro-optique est configuré pour moduler le faisceau laser initial sur la base du signal de modulation afin de générer un troisième faisceau laser qui comprend une porteuse et une ou plusieurs bandes latérales et régler la puissance de la porteuse dans le troisième faisceau laser et la puissance de la bande latérale dans le troisième faisceau laser sur la base de la puissance du signal de modulation ; et

le réseau sélectif planaire est configuré pour séparer le premier faisceau laser et le deuxième faisceau laser du troisième faisceau laser, émettre le premier faisceau laser vers la première extrémité d'entrée et émettre le deuxième faisceau laser vers la seconde extrémité d'entrée.

11. Générateur de nombres aléatoires quantiques selon la revendication 8, dans lequel le modulateur de fréquence comprend un second séparateur de faisceau, une source de signal, un modulateur électro-optique et un filtre, dans lequel

le second séparateur de faisceau est configuré pour diviser le faisceau laser initial afin de générer le premier faisceau laser et un quatrième faisceau laser, émettre le premier faisceau laser vers la première extrémité d'entrée du premier séparateur de faisceau et émettre le quatrième faisceau laser vers l'électro-modulateur optique ;

la source de signal est configurée pour fournir un signal de modulation pour le modulateur électro-optique ;

une extrémité de sortie du modulateur électro-optique est connectée à une extrémité d'entrée du filtre et le modulateur électro-optique est configuré pour moduler le quatrième faisceau laser sur la base du signal de modulation afin de générer un cinquième faisceau laser qui comprend une porteuse et une ou plusieurs bandes latérales et régler la puissance de la porteuse dans le cinquième faisceau laser et la puissance de la bande latérale dans le cinquième faisceau laser sur la base de la puissance du signal de modulation ; et

le filtre est configuré pour filtrer le cinquième faisceau laser afin d'obtenir le deuxième faisceau laser et émettre le deuxième faisceau laser vers la seconde extrémité d'entrée.

12. Générateur de nombres aléatoires quantiques selon l'une quelconque des revendications 9 à 11, dans lequel
une fréquence du signal de modulation fourni par la source de signal est supérieure à une limite supérieure de la plage de fréquences de réponse.

13. Générateur de nombres aléatoires quantiques selon l'une quelconque des revendications 1 à 12, dans lequel le premier faisceau laser et le deuxième faisceau laser satisfont que les directions de polarisation sont orthogonales et le module de génération laser comprend en outre un ou plusieurs d'un premier dispositif de commande de polarisation et d'un second dispositif de commande de polarisation, dans lequel

le premier dispositif de commande de polarisation est configuré pour recevoir le premier faisceau laser, régler une direction de polarisation du premier faisceau laser et émettre le premier faisceau laser dont la direction de polarisation est réglée sur la première extrémité d'entrée ; et

le second dispositif de commande de polarisation est configuré pour recevoir le deuxième faisceau laser, régler une direction de polarisation du deuxième faisceau laser et émettre le deuxième faisceau laser dont la direction de polarisation est réglée vers la seconde extrémité d'entrée.

14. Générateur de nombres aléatoires quantiques selon l'une quelconque des revendications 1 à 4, dans lequel le premier faisceau laser et le deuxième faisceau laser satisfont que les directions de polarisation sont orthogonales et le module de génération laser comprend un laser et un séparateur de faisceau de polarisation, dans lequel

le laser est configuré pour émettre un faisceau laser initial vers le séparateur de faisceau de polarisation ; et
le séparateur de faisceau de polarisation est configuré pour effectuer une séparation de faisceau de polarisation sur le faisceau laser initial afin d'obtenir le premier faisceau laser et le deuxième faisceau laser dont les directions de polarisation sont orthogonales, émettre le premier faisceau laser vers la première extrémité d'entrée et émettre le deuxième faisceau laser à la seconde extrémité d'entrée.

15. Générateur de nombres aléatoires quantiques selon l'une quelconque des revendications 8 à 12 ou la revendication 14, dans lequel le module de génération laser comprend en outre un ou plusieurs d'un troisième atténuateur optique et d'un quatrième atténuateur optique, dans lequel

le troisième atténuateur optique est configuré pour recevoir le premier faisceau laser, régler la puissance du premier faisceau laser et émettre le premier faisceau laser dont la puissance est réglée à la première extrémité d'entrée ; et
le quatrième atténuateur optique est configuré pour recevoir le deuxième faisceau laser, régler la puissance du deuxième faisceau laser et émettre le deuxième faisceau laser dont la puissance est réglée à la seconde extrémité d'entrée.

16. Générateur de nombres aléatoires quantiques selon l'une quelconque des revendications 1 à 15, dans lequel

le module de génération laser comprend L extrémités de sortie et le premier séparateur de faisceau comprend N extrémités d'entrée et M extrémités de sortie, L, N et M étant tous des entiers positifs supérieurs à 2, et L étant inférieur ou égal à N ;

chaque extrémité de sortie du module de génération laser est connectée à une extrémité d'entrée du premier séparateur de faisceau et le module de génération laser est configuré pour émettre un faisceau laser vers le premier séparateur de faisceau à travers chaque extrémité de sortie, le premier faisceau laser et le second les faisceaux laser sont des faisceaux laser émis par le module de génération laser à travers deux extrémités de sortie des L extrémités de sortie ; la première extrémité d'entrée et la seconde extrémité d'entrée du premier séparateur de faisceau sont deux extrémités d'entrée des N extrémités d'entrée et le premier séparateur de faisceau est configuré pour diviser N faisceaux laser reçus à travers les N extrémités d'entrée en M faisceaux laser ; et
deux extrémités de sortie des M extrémités de sortie du premier séparateur de faisceau sont connectées au détecteur ou le générateur de nombres aléatoires quantiques comprend une pluralité de détecteurs et une pluralité de modules de traitement connectés biunivoque à la pluralité de détecteurs, et une extrémité d'entrée de chaque détecteur est connectée à deux extrémités de sortie des M extrémités de sortie.

17. Système de génération de clé, le système de génération de clé comprenant un appareil de génération de clé et le générateur de nombres aléatoires quantiques selon l'une quelconque des revendications 1 à 16, dans lequel

le générateur de nombres aléatoires quantiques est connecté à l'appareil de génération de clé et le générateur de nombres aléatoires quantiques est configuré pour envoyer un nombre aléatoire à l'appareil de génération de clé ; et
l'appareil de génération de clé est configuré pour générer une clé sur la base du nombre aléatoire.

FIG. 1

FIG. 2

FIG. 3

FIG. 4

FIG. 5

301

303

304

306

302

FIG. 6

Laser generation module 10

First beam splitter 20

Detector 30

Processing module 40

FIG. 7

Laser generation module 10

First current
control
submodule 103a

First laser 101a

Second laser 102a

Second current
control
submodule 104a

First beam
splitter
20

Detector
30

Processing
module
40

FIG. 8

Laser generation module 10

First laser 101a

First optical
attenuator
105a

Second laser
102a

Second optical
attenuator
106a

First beam
splitter
20

Detector
30

Processing
module
40

FIG. 9

Laser generation module 10

Laser 101b → Frequency modulator 102b → First beam splitter 20 → Detector 30 → Processing module 40

FIG. 10

Laser generation module 10

Frequency modulator 102b

Laser 101b → AOM 102b2 → First beam splitter 20 → Detector 30 → Processing module 40

Signal source 102b1 → AOM 102b2

FIG. 11

$f1$

$f0$ → AOM 102b2 → $f0-f1$
$f0$
$f0+f1$

AOM 102b2

FIG. 12

FIG. 13

Frequency modulator 102b

Signal source 102b1

EOM 102b3

AWG 102b4

Laser 101b

First beam splitter 20

Detector 30

Processing module 40

FIG. 14

$f1$

$f0$

$f0, f0\pm f1, f0\pm 2f1, f0\pm 3f1$

FIG. 15

Laser generation module 10

Signal source
102b1

Third optical
attenuator
107

Laser 101b → EOM 102b3 → AWG 102b4

First beam
splitter
20

Detector
30

Processing
module
40

FIG. 16

Frequency modulator 102b

Laser
101b

Second beam
splitter 102b5

EOM 102b3

Filter
102b6

Signal source
102b1

First beam
splitter
20

Detector
30

Processing
module
40

FIG. 17

FIG. 18

EP 3 848 792 B1

FIG. 19

FIG. 20

FIG. 21

Laser generation module 10

Third optical attenuator 107

Laser 101c

Polarization beam splitter 102c

First beam splitter 20

Detector 30

Processing module 40

FIG. 22

Laser generation module 10

1
2
3

L–2
L–1
L

First beam splitter 20

1
2
3

N–2
N–1
N

1
2
3

M–2
M–1
M

Detector 30

Processing module 40

FIG. 23

FIG. 24

FIG. 25